(19) Europäisches Patentamt / European Patent Office / Office européen des brevets

(11) **EP 2 139 752 B1**

(12) **EUROPÄISCHE PATENTSCHRIFT**

(45) Veröffentlichungstag und Bekanntmachung des Hinweises auf die Patenterteilung:
**19.09.2012 Patentblatt 2012/38**

(21) Anmeldenummer: **08715561.0**

(22) Anmeldetag: **20.03.2008**

(51) Int Cl.:
**B62M 11/06** *(2006.01)*  **B62M 11/04** *(2006.01)*
**B62M 9/04** *(2006.01)*

(86) Internationale Anmeldenummer:
**PCT/DE2008/000482**

(87) Internationale Veröffentlichungsnummer:
**WO 2008/113340 (25.09.2008 Gazette 2008/39)**

(54) **ZUGMITTELGETRIEBE MIT NIERENFÖRMIGER FORM DER ZUGMITTEL**

BELT DRIVE WITH KIDNEY-SHAPED TRACTION MEANS

TRANSMISSION PAR LIEN SOUPLE RENIFORME

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.03.2007 DE 102007013443**

(43) Veröffentlichungstag der Anmeldung:
**06.01.2010 Patentblatt 2010/01**

(73) Patentinhaber: **The Gates Corporation**
**Denver, CO 80202 (US)**

(72) Erfinder: **CLARKE, Arthur, Jack**
**Dumfries and Galloway DG2 9SQ (GB)**

(74) Vertreter: **Tunstall, Christopher Stephen**
**Carpmaels & Ransford**
**One Southampton Row**
**London**
**WC1B 5HA (GB)**

(56) Entgegenhaltungen:
**WO-A-98/41779**   **US-A- 2 168 322**
**US-A1- 2004 066 017**   **US-A1- 2004 097 309**
**US-B1- 6 364 797**

EP 2 139 752 B1

## Beschreibung

Die Erfindung betrifft ein Zugmittelgetriebe für Fahrzeuge oder für den Einsatz in der Antriebstechnik mit einer an einem Gestell gelagerten Eingangswelle und Ausgangswelle, wobei die Eingangswelle und die Ausgangswelle aus dem Gestell herausgeführt sind, mit den folgenden Merkmalen:

   a) zwischen der Eingangswelle und der Ausgangswelle befinden sich Getriebeübersetzungen mit Getrieberädern, die Zugmittelgetriebe ausgeführt sind,
   b) alle Getrieberäder befinden sich während des Betriebs ständig in Rotation,
   c) die zwischen der Eingangswelle und der Ausgangswelle befindlichen Getriebeübersetzungen sind als Zugmittelgetriebe mit Zahnriemen als Zugmittel und mit Zahnriemenscheiben als Getrieberäder ausgeführt,
   d) die Zugmittel sind durch Aramid, Kevlar, Kohlfaser oder andere Faserwerkstoffe verstärkt.

Stand der Technik

Schaltbare Getriebe sind seit den letzten 100 Jahren aus dem Bereich der motorisierten Kraftfahrzeuge nicht mehr wegzudenken. Ebenso finden sie in der Antriebstechnik an zahlreichen Maschinen ihre Verwendung. Sehr oft handelt es sich um Getriebekonstruktionen, die mit Hilfe von Zahnrädern als Stirnradgetriebe oder Umlaufgetriebe (Planetengetriebe) arbeiten. Die Fertigungstechnik dieser Getriebe ist jedoch meist sehr aufwendig und teuer. Da diese kraftübertragenden Getriebebauteile meist aus Stahl gefertigt sind, rückt das Gewicht momentan immer weiter in den Fokus der Kritik und ist als Nachteil zu werten. Leichtere Getriebe würden zum Beispiel den Energieverbrauch senken. Die im folgenden zu beschreibende Neuheit ist in allen denkbaren Produktzweigen einsetzbar und besonders in Bezug auf das geringe Gewicht hervorragend geeignet für den Einsatz in Fahrzeugen, da faserverstärkte Kunststoffe als kraftübertragende Bauteile eingesetzt werden. Beispielhaft sind hier Landfahrzeuge, Luftfahrzeuge und Wasserfahrzeuge zu sehen, die mit Verbrennungsmotoren, Elektromotoren oder auch anderen Aggregaten ausgestattet sein können. Ebenfalls ist ein Einsatz in Fahrzeugen denkbar, die mit Muskelkraft angetrieben werden. Um leichten Vortrieb zu gewährleisten, müssen die Fahrzeuge außergewöhnlich leicht sein. Die Funktionsbeschreibung des Getriebes soll aus diesem Grunde beispielhaft an einem Fahrrad vorgenommen werden.

In den vergangenen vierzig Jahren hat sich bei Fahrrädern der Kettenantrieb mit einer Schaltmöglichkeit an der Hinterachse durchgesetzt. Dazu wird am Rahmen, der den tragenden Bestandteil des Fahrrades mit all seinen Aufnahmepunkten für die Vorderradgabel, die Sattelstütze sowie das Hinterrad bildet, ein drehbares Tretlager mit einem oder mehreren Kettenblättern montiert. Auf der Nabe des Hinterrades befindet sich eine aus bis zu zehn verschieden großen Ritzeln bestehende Kassette. An einem Ausfallende, das sich unmittelbar an der Hinterachse befindet, wird ein Schaltwerk angebracht, dessen Aufgabe es ist, die Kette auf den Ritzeln der Kassette zu führen und Schaltvorgänge zu ermöglichen. Durch einen meist am Sitzrohr angebrachten Umwerfer kann am Tretlager zwischen den verschiedenen Kettenblättern gewechselt werden.

Durch die Möglichkeit des Schaltens kann der Fahrer die Übersetzung seines Antriebes auf die jeweilige Fahrsituation anpassen. Fahrräder mit einem Schaltungssystem, wie oben beschrieben, werden im Allgemeinen als Fahrräder mit Kettenschaltung bezeichnet.

Da bei einem Rad mit Kettenschaltung konstruktionsbedingt die Komponenten außen am Rahmen montiert sind, sind sie Umwelteinflüssen besonders stark ausgesetzt. So kommen Schmutz und Wasser ungehindert an Schaltwerk, Kette, Kassette und sonstige Bauteile. Hierdurch verringert sich der zunächst sehr gute Wirkungsgrad einer Kettenschaltung drastisch, so dass ein nicht unerheblicher Teil der Kraft zur Überwindung der Widerstände innerhalb der Schaltung aufgewendet werden muss. Um die Funktion zu gewährleisten ist es erforderlich, dass die Komponenten der Kettenschaltung regelmäßig gewartet werden; das umfasst die Reinigung und das Fetten der Komponenten genauso wie die penible Einstellung. Diese kann sich zum Beispiel bei Stürzen oder Kontakt mit Gegenständen (Steine, Äste etc.) leicht verändern. Da auch bei intensivster Wartung immer kleinste Schmutzpartikel in der Schaltung und insbesondere in den Lagern zurück bleiben, müssen einige Teile regelmäßig ausgetauscht werden. Gerade die verschleißanfälligen Teile, wie Kettenblätter und Kette, erfordern einen jährlichen Wechsel, mit dem wiederum zusätzliche Kosten verbunden sind.

Das Schalten bei der Kettenschaltung ist nur bei drehenden Ritzeln möglich, da sonst die Kette nicht umgeworfen werden kann. Daher ist es als weiterer Nachteil zu sehen, dass durch den konstruktiven Aufbau Schalten im Stand unmöglich ist. Des Weiteren können Komponenten bei einem Sturz oder einer Berührung mit Steinen oder Ästen beschädigt oder vom Rahmen abgerissen werden. Die angeführten Umstände sind als Nachteil der Kettenschaltung zu sehen.

Alternativ zur "Kettenschaltung" wurde die so genannte "Nabenschaltung" entwickelt, bei der die Schaltvorgänge in einem Getriebe in der Hinterradnabe stattfinden. Die bei der Kettenschaltung benötigten Teile Schaltwerk, Umwerfer und Kassette fallen somit weg. Solche Fahrräder heißen im Allgemeinen Fahrräder mit Nabenschaltung. Eine Nabenschaltung vermeidet also die Nachteile einer Kettenschaltung. Durch das in die Hinterradnabe integrierte Getriebe steigt jedoch das Gewicht des Hinterrades. Insbesondere bei so genannten Mountainbikes, die im Geländer bewegt werden, macht sich eine Erhöhung der Masse am Hinterrad sehr stark bemerkbar. Dies gilt vor allem für solche mit Hinterrad-Federung. Für das Fahrverhalten eines gefederten Rades ist das Verhältnis von gefederter zu ungefederter Masse von entscheidender Bedeutung. Je größer die ungefederte Masse im Verhältnis zur gefederten Masse ist, desto kritischer ist das Fahrverhalten des Rades. Stöße, verursacht durch Fahrbahnunebenheiten, können bei hoher ungefederter Masse (schweres Hinterrad) nicht optimal vom Fahrwerk abgefangen werden.

Bei einem bekannten Fahrrad (vergl. DE 103 39 207) befindet sich das Getriebe innerhalb des Fahrradrahmens. Das Tretlagergehäuse des klassischen Fahrradrahmens fällt weg und wird durch das Getriebegehäuse ersetzt. Hierbei handelt es sich um ein gemeinsames Gehäuse für Getriebe und Tretlager. Ähnlich den Fahrrädern mit Getriebenabe wird die Kraft bei Getrieberädern über eine Kette oder einen Zahnriemen zum Hinterrad übertragen. Die Kette und die Hinterradnabe haben bei diesem System keine Schaltfunktion. So kann man die Hinterradnabe sehr leicht bauen, was eine leistungsfähigere Hinterrad-Federung zur Folge hat. Hinzu kommt, dass sich der Schwerpunkt in der Mitte des Rades, direkt unter dem Fahrer befindet. Ein agileres und kontrolliertes Fahrverhalten ist die Folge. Des Weiteren lässt sich mit Hilfe des im Rahmen integrierten Getriebes die so genannte "Plattformstrategie" einsetzen. War es im Fahrradbau bisher üblich, zunächst einen Rahmen zu bauen und diesen dann nachträglich mit seinen Komponenten auszurüsten, ist es mit dem Konzept des im Rahmen integrierten Getriebes erstmals möglich, die Plattformstrategie aus dem Automobilbau in der Fahrradherstellung einzusetzen. In dem Getriebegehäuse als Plattform werden zum Beispiel Komponenten wie Schaltung, Federung, die komplette Kraftübertragung, aber auch Bremsen, Dynamo und Beleuchtung fest angebracht. An dem so ausgerüsteten Getriebe werden dann die kundenspezifischen Teile montiert, die das Fahrrad nach Kunden- oder Herstellerwunsch vervollständigen. Das Getriebe nach DE 103 39 207 besteht aus einem Planetengetriebe und einem Primärantrieb. Der Primärantrieb ist notwendig, weil das für den Einsatz in einer Getriebenabe entwickelte Planetengetriebe den hohen im Tretlager wirkenden Momenten nicht standhält. Das Planetengetriebe wird durch den Primärantrieb auf eine höhere Drehzahl gebracht, um den wirkenden Kräften standzuhalten. Durch diese Konstruktion sinkt jedoch der Wirkungsgrad des Antriebs. Dies ist als Nachteil gegenüber der Erfindung zu sehen. Ebenso sind ähnliche Getriebe beispielsweise aus US 5,553,510, US 4,955,247, US 5,924,950, DE 20 201 787 U1, WO 2006/039880 A1, US 2004/0067804 A1 und US 2004/0066017 A1 bekannt. Ihr Aufbau ist meist sehr schwer und komplex. Durch die Erfindung wird eine leichte und einfach gebaute Lösung für den angeführten Getriebetyp geliefert. Alle diese Getriebe stellen verschiedene Übersetzungen zwischen zwei parallelen Wellen her. Hierbei ist meist eine der Wellen die Antriebswelle und eine andere Welle die Abtriebswelle. Die Antriebswelle sei im Folgenden auch als Eingangswelle bezeichnet. Die Abtriebswelle sei im Folgenden auch als Ausgangswelle bezeichnet. Wenn im Folgenden nur der Begriff Welle verwendet wird, so sei die Eingangs- oder die Ausgangswelle gemeint.

Die Erfindung verbessert somit Mehrfachgetriebe mit Eingangswelle und Ausgangswelle, wobei die Eingangswelle zur Aufnahme des Eingangsdrehmoment ausgestaltet ist und die Ausgangswelle meist aus dem Getriebegehäuse herausgeführt ist und an diesem Ende zur Weiterleitung des Drehmomentes bis zu den Rädern des Fahrzeuges ausgestaltet ist. Im Gehäuse sind beispielsweise auf der Eingangswelle und der Ausgangswelle Zugmittelräder parallel angebracht und mit Zugmitteln paarweise verbunden. Mit Hilfe einer Schaltansteuerung können die Zugmittelräder zur Ausgangswelle gekoppelt werden. Das Fahrzeug kann beispielsweise ein Fahrrad sein, wobei dort die Eingangswelle zur Aufnahme von Tretkurbeln ausgestaltet und mit ihren beiden Enden aus dem Getriebegehäuse herausgeführt ist. Die Ausgangswelle besitzt an ihrem Ende ein Ritzel zur Drehmomentübertragung zum Hinterrad. Ebenso kann das Fahrzeug ein Motorrad sein, bei welchem sich das Getriebe vorteilhafterweise hinter dem Kurbelgehäuse befindet. Die Eingangswelle ist in geeigneter Weise mit der Kurbelwelle verbunden. Die Ausgangswelle überträgt das Drehmoment durch ein weiteres Maschinenelement (beispielsweise Kette, Zahnriemen, Kardan) zum Hinterrad. Auch ist der Einsatz in einem Kraftfahrzeug in vorteilhafter Weise denkbar.

Ein solches Zugmittelgetriebe ist beispielsweise aus der US 4,158,316 bekannt. Bei diesem Getriebe sind mehrere Kettenräder mit unterschiedlichen Durchmessern drehbar auf der Achse gelagert. Durch eine Kupplung können die Kettenräder mit der Welle drehfest verbunden werden und somit ein Drehmoment übertragen. Der Nachteil dieser Erfindung liegt einerseits im hohen Gewicht, insbesondere durch die Benutzung einer Stahlkette, andererseits im großen Platzbedarf, der Komplexität der Kupplungen sowie der Kupplungsansteuerung.

Ein ähnliches Zugmittelgetriebe ist beispielsweise aus der US 2004/0067804 A1 und US 2004/0066017 A1 bekannt. Bei diesen Fahrradgetrieben sind auf der Antriebs- und Abtriebswelle verschiedene Zugmittelräder angebracht, die paarweise mit Zugmitteln verbunden sind. Unterschiedliche Übersetzungsverhältnisse werden dadurch erreicht, dass ein Schaltelement innerhalb der Abtriebswelle mit Hilfe eines Seilzuges axial verschoben wird. Ein Verbindungselement am Schaltelement kuppelt in das gewünschte Zugmittelrad ein und erzeugt eine drehfeste Verbindung zwischen Abtriebswelle und Zugmittelrad. Der beschriebene Aufbau hat jedoch Nachteile, die im Folgenden näher erläutert werden.

Beide Patente führen in ihrem Hauptanspruch an, dass die Zugmittelräder so nebeneinander verbaut sind, dass sie die Form einer konischen Umhüllung bilden. Die Form einer konischen Umhüllung wird dann gebildet, wenn die Durchmesser der Zugmittelräder von klein nach groß auf der Welle ansteigt. Genau diese Eigenart von US 2004/0067804 A1 und US 2004/0066017 A1 ist als ein Nachteil zu sehen:

Übersetzungen an Fahrrädern sollten im Bereich von 0.7-4.0 ins Schnelle übersetzen. Betrachtet man in US 2004/0067804 A1 und US 2004/0066017 A1 die Größe der Kettenräder und ihre Zähnezahl, so ist diese Übersetzungsbandbreite im Gegensatz zur Neuheit nur schwer zu erreichen. Weiterhin sind, von der sportbiologischen Seite gesehen, nur Gangsprünge, die weniger als 15% ausmachen, durch den menschlichen Organismus gut zu bewältigen.

Die so genannte Sekundärübersetzung wird durch zwei weitere Zugmittelräder gebildet, die das Drehmoment vom Getriebe zum Hinterrad übertragen. Es ist vorteilhaft, wenn diese Zugmittelräder durch ihre Proportionen die Funktion der Tretkurbeln und der Hinterradnabe nicht beeinträchtigen. Der Aufbau gemäß US 2004/0067804 A1 und US 2004/0066017 A1 würde sehr groß und voluminös bauen, falls die Randbedingungen im Bezug auf Sekundärübersetzung, Gesamtübersetzung und Gangsprung erreicht werden sollen. Die Neuheit baut im Vergleich zu den angeführten Konstruktionen sehr viel kleiner.

Zugmittelgetriebe haben im Allgemeinen einen diskreten Achsabstand, der ausschließlich von der Teilung und der Länge des Zugmittels, sowie dem Durchmesser beziehungsweise der Zähnezahl der verwendeten Zugmittelräder abhängt.

Man kann diesen Achsabstand durch die folgende Formel beschreiben:

$$a = p/4 \left[ X - (z_1 + z_2)/2 + \sqrt{[X - (z_1 + z_2)/2]^2 - 8[(z_2 - z_1)/(2\pi)]^2} \right]$$

a = Achsabstand
p = Kettenteilung der Kette
X = Gliederzahl der Kette
$Z_1$ = Zähnezahl des kleinen Kettenrades
$Z_2$ = Zähnezahl des großen Kettenrades.

Wendet man diese Formel auf US 2004/0067804 A1 und US 2004/0066017 A1 an, so findet man heraus, dass nicht jedes einzelne Zugmittelrad den richtigen Achsabstand besitzt. Ein Aufbau gemäß US 2004/0067804 A1 und US 2004/0066017 A1 ist somit nachteilig, da manche Ketten gespannt sind und andere zu locker sind. Dies ist als großer Nachteil gegenüber der Neuheit zu sehen, da falsch gespannte Zugmittel einen zu hohen Verschleiß besitzen.

Dieser Nachteil sei im Folgenden als "nur diskrete Achsabstände möglich" bezeichnet. Auch bei US 4,158,316 sind aufgrund der verwendeten Zugmittel nur diskrete Achsabstände möglich. Auch dieses ist als Nachteil zu sehen. Zusätzlich ist anzumerken, dass auch bei Zahnradgetrieben dieser Nachteil der diskreten Achsabstände auftritt.

Ein weiterer großer Nachteil ist bei US 4,158,316, US 2004/0067804 A1 und US 2004/066017 A1 innerhalb der Schaltansteuerung zu finden. Falls ein Gangwechsel durchgeführt werden soll, so wird zunächst ein Zugmittelrad von der Abtriebswelle abgekoppelt und darauf folgend erst ein weiteres Zugmittelrad zur Welle eingekoppelt. Dies hat zur Folge, dass bei diesen Antrieben eine ständige drehfeste Verbindung zwischen der Welle und einem Zahnrad nicht gewährleistet ist. Es kann während eines Gangwechsels eine Leerlaufstellung eintreten. Für den Radfahrer bedeutet das ein plötzliches "ins Leere" treten. Hierdurch können Verletzungen, besonders im Kniebereich, auftreten. Die Neuheit ist so aufgebaut, dass kein Leerlauf zwischen einzelnen Gängen während des Gangwechsels auftreten kann. Dies ist als großer Vorteil zu werten.

In der Vergangenheit sind immer wieder Zugmittelgetriebe mit parallel laufenden Zugmitteln anzutreffen, bei denen die Zugmittelräder zu einer Achse eingekoppelt werden (siehe auch CH 167367, US 6,146,296 und US 5,871,412). Alle diese Konstruktionen weisen jedoch den Nachteil auf, dass zwischen zwei eingekoppelten Übersetzungen immer ein kleines Zeitfenster mit einem Leerlauf entstehen könnte. Insbesondere unter Last ist nicht sicherzustellen, dass es während dieses Zeitfensters zu einem kurzzeitigen Durchrutschen kommen könnte. Ebenfalls führt solch ein Durchrutschen zu enormen Verschleiß an den Kupplungen. Langfristig sind unter Umständen Schädigungen nicht auszuschließen. Die Neuheit hat den Vorteil, dass zwischen zwei Gängen während des Gangwechsels immer ein drehmomentübertragendes Bauteil in Eingriff ist.

Das Dokument US 2004/0066017 A1 wird als nächster Stand der Technik angesehen und offenbart die Merkmale des Oberbegriffs des Anspruchs 1.

Zusammenfassend gesagt haben viele Getriebe nach dem Stand der Technik Probleme in Bezug auf Gewicht, Fertigungskosten, Schaltbarkeit unter Last, Leerlauf und der Schaltbarkeit im Stand.

Aufgabenstellung:

Von dieser Problemstellung ausgehend sollen die eingangs beschriebenen Mehrfachgetriebe verbessert werden.

Die vorliegende Erfindun sieht ein Zugmittelgetriebe nach den Ansprüchen vor. In einer bevorzugten Ausgestaltung ist ein gattungsgemäßes Mehrfachgetriebe so angeordnet, dass:

> e) mindestens ein Bauteil innerhalb des Kupplungsmittels die Eigenschaften eines Permanentmagneten mit einem magnetischen Nord- und Südpol besitzt,
> und
> f) der Zustand der Kupplungsmittel sich durch die Veränderung eines zusätzlichen Magnetfelds innerhalb oder in der unmittelbaren Nähe der Kupplungsmittel verändert, und
> g) während mindestens eines Schaltvorganges sich der Zustand von mindestens zwei Kupplungsmitteln gleichzeitig ändert, und
> h) mindestens ein Kupplungsmittel nur Drehmomente in eine Drehrichtung übertragen kann.

Dadurch, dass mindestens ein Bauteil innerhalb des Kupplungsmittels die Eigenschaften eines Permanentmagneten mit einem magnetischen Nord- und Südpol besitzt und sich der Zustand der Kupplungsmittel durch die Veränderung eines zusätzlichen Magnetfelds innerhalb oder in der unmittelbaren Nähe der Kupplungsmittel verändert und dass während mindestens eines Schaltvorgangs sich der Zustand von mindestens zwei Kupplungsmitteln gleichzeitig ändert und dass mindestens ein Kupplungsmittel nur Drehmomente in eine Drehrichtung übertragen kann, ist es ausgeschlossen, dass durch einen Schaltfehler versehentlich in eine Leerlaufstellung des Getriebes geschaltet wird, wodurch Beschädigungen am Getriebe und u.U. Verletzungen bei einem Radfahrer auftreten können. Da für einen Gangwechsel nur Magnetfelder verändert werden, sind Schaltwechsel unter Last und auch im Stand möglich.

Wenn mindestens ein Bauteil eine Position in einem Abstand relativ zu einer Verzahnung eines Kupplungsmittels einnimmt, nachdem sich zwei gleich gepolte Magnetfelder aufeinander zu bewegt haben, kann sichergestellt werden, dass die Schaltkräfte im Vergleich zum Stand der Technik reduziert sind.

Da das formschlüssige Kupplungsmittel durch Freilaufzähne gebildet wird, die in eine Verzahnung eingreifen können, kann der Gesamtaufbau sehr einfach gehalten werden.

Ein sehr platzsparender Aufbau ergibt sich, wenn die Verzahnung innerhalb des Kupplungsmittels als Innenverzahnung ausgeführt ist.

Vorzugsweise sind innerhalb des Kupplungsmittels die Freilaufzähne symmetrisch zur Verzahnung angeordnet, um die Kräfte gleichmäßig zu übertragen.

Wenn die Freilaufzähne kippbar auf Stahlachsen innerhalb der Welle gelagert sind, auf der sich das Kupplungsmittel befindet, dann wird das Drehmoment in vorteilhafter Weise weitergeleitet.

Niedrige Herstellungskosten werden unter anderem dadurch erreicht, wenn mindestens ein Kupplungsmittel aus einem Permanentmagneten und einem Stahlbauteil zusammengefügt sind. Derselbe Vorteil ergibt sich, wenn die Permanentmagneten, die axial verschoben werden, hierzu in ein Steuerschieberbauteil eingefügt werden.

Eine vorteilhafte Ansteuerung des Getriebes wird umgesetzt, wenn die Veränderung des Magnetfelds durch axiale Verschiebung von Permanentmagneten entlang der Drehachse der Welle erreicht wird, auf welcher sich das Kupplungsmittel befindet.

Überflüssiges Gewicht wird vermieden, wenn die axiale Verschiebung von Permanentmagneten innerhalb einer hohlen Abtriebswelle vollzogen wird.

Auch Getriebe ohne bauraumbedingten Zugang zum Inneren der Wellen können gemäß der Neuheit aufgebaut werden, wenn die axiale Verschiebung der Permanentmagneten außerhalb der Eingangswelle vollzogen wird.

Niedrige Herstellungskosten werden unter anderem dadurch erreicht, wenn die Permanentmagneten, die axial verschoben werden, hierzu in ein Steuerschieberbauteil eingefügt werden.

Vorzugsweise sind die Permanentmagneten in unterschiedlicher Polung in das Steuerschieberbauteil eingefügt, damit durch die Verwendung von vielen gleichen Teilen die Herstellungskosten niedrig gehalten werden können.

Es ergibt sich eine vorteilhaft einfache Schaltansteuerung, wenn sich innerhalb des Steuerschierbebauteils eine Lagerung befindet, um das Schaltsignal von einem drehenden auf ein stehendes Bauteil zu übertragen.

Eine sehr preisgünstige Lösung zur axialen Bewegung des Steuerschieberbauteils wird erreicht, wenn das Steuerschieberbauteil mit einem Zugmittel in Verbindung steht.

Vorzugsweise nimmt das Steuerschieberbauteil innerhalb seiner axialen Bewegung gegenüber der Welle Rastpunkte ein, um in reproduzierbar gleicher Weise das Magnetfeld innerhalb oder in der unmittelbaren Nähe der Kupplungsmittel zu verändern. Hierdurch wird die Schaltpräzision verbessert.

Störungsfreiheit bei Vibrationen von außen wird erreicht, wenn eine gekippte Lage des Freilaufzahns auf der Stahlachse durch einen Permanentmagneten gehalten wird.

Der Einbau dieses Permanentmagneten ist besonders einfach, wenn der Permanentmagnet in die Welle eingefügt ist, auf welcher sich das Kupplungsmittel befindet.

Die notwendigen Schaltkräfte werden niedrig gehalten, wenn die formschlüssige drehfeste Verbindung zwischen Welle und Getrieberad mit Hilfe der Energie aufgehoben werden kann, die zeitlich vor dem Entkoppeln im Magnetfeld gespeichert wurde.

Eine vollständig elektronische Ansteuerung des Zustands der Kupplungsmittel kann erreicht werden, wenn die Veränderung eines zusätzlichen Magnetfelds innerhalb oder in der unmittelbaren Nähe der Kupplungsmittel durch Elektromagneten vollzogen wird. Dieses kann in manchen Einsatzbereichen des Getriebes von Vorteil sein.

Das Getriebe ist vor äußerer Verschmutzung geschützt, wenn das Gestell des Getriebes als geschlossenes Gehäuse ausgeführt ist.

Das Eigengewicht verringert sich stark, wenn die zwischen der Eingangswelle und der Ausgangswelle befindlichen Getriebeübersetzungen als Zugmittelgetriebe mit Zahnriemen als Zugmittel und mit Zahnriemenscheiben als Getrieberäder ausgeführt sind.

Besonders hohe Leistungen und Drehmomente können übertragen werden, wenn die Zugmittel durch Aramid, Kevlar oder Kohlfaserwerkstoffe verstärkt sind.

Einen besonders geringen Verschleiß an den Zugmitteln erhält man, wenn die Faserwerkstoffe der Zahnriemen mit Polyurethan umhüllt sind.

Eine geringe Reibung erhält man, wenn das Zugmittel während lastfreier Rotation auf den Zahnriemenrädern durch mindestens ein Bauteil in eine nierenähnliche Form gedrückt wird und dass unter Lasteinwirkung dieses Bauteil das Zugmittel nicht berührt. Zusätzlich ist es dann optimal, wenn die nierenähnliche Form der Zugmittel während lastfreier Rotation durch eine konvexe Wölbung des Lasttrums und durch eine konkave Wölbung des Leertrums gebildet wird.

Das Überspringen des Zahnriemens auf den Zahnriemenscheiben kann auf vorteilhafte Weise dadurch erreicht werden, wenn die nierenähnliche Form der Zugmittel unter Last durch eine gerade Form des Lasttrums und durch eine verstärkte konkave Wölbung des Leertrums gebildet wird.

Zusätzlich kann man die Reibung der Zahnriemen senken, wenn die Zugmittel während des Schaltvorgangs ihre Riemenspannung ändern.

Mehr Sicherheit gegen Überspringen des Zahnriemens auf den Zahnriemenscheiben wird erreicht, wenn die Zugmittel während des Schaltvorgangs ihren Umschlingungswinkel auf dem Zahnriemenrad ändern.

Die Reibung kann zusätzlich gesenkt werden, wenn mindestens ein Bauteil, das das Zugmittel in eine nierenförmige Form drückt, als Rolle ausgebildet ist.

Werden auf der Leertrumseite zusätzliche Führungen berührungslos in unmittelbarer Nähe der Zahnriemen angeordnet, die ähnlich der Außenkontur des Zahnriemens geformt sind, so wird auf diese Weise mehr Sicherheit gegen Überspringen des Zahnriemens auf den Zahnriemenscheiben bei Laststößen und Störgrößen von außen erreicht, ohne die Reibung zusätzlich zu erhöhen.

Auf die Patentanmeldung DE 10 2007 013 443.8 wird vollinhaltlich Bezug genommen.

Ausführungsbeispiel:

Mit Hilfe einer Zeichnung sollen Ausführungsbeispiele der Erfindung nachfolgend näher erläutert werden. Es zeigt:

Figur 1      ein Motorrad in Seitenansicht und mit dem im Rahmen integrierten Zugmittelgetriebe
Figur 2      ein Kraftwagen in Seitenansicht und mit dem im Rahmen integrierten Zugmittelgetriebe
Figur 3      ein Fahrrad in Seitenansicht und mit dem im Rahmen integrierten Zugmittelgetriebe
Figur 4a      das Zugmittelgetriebe in Explosionsansicht
Figur 4b      das Zugmittelgetriebe in perspektivischer Darstellung
Figur 5a      das Zugmittelgetriebe ohne Schaltansteuerung, Gehäuse, Zugmittel und Zugmittelscheiben
Figur 5b      das Zugmittelgetriebe ohne Schaltansteuerung, Gehäuse, Zugmittel und Zugmittelscheiben in Explosionsansicht
Figur 6a      Aufbau der Abtriebswellenbaugruppe in Explosionsansicht
Figur 6b      Aufbau der Abtriebswellenbaugruppe in perspektivischer Ansicht
Figur 7a      Aufbau der Zugmittelscheiben auf Antriebswelle und Abtriebswelle in Explosionsansicht
Figur 7b      Aufbau der Zugmittelscheiben auf Antriebswelle und Abtriebswelle in perspektivischer Darstellung
Figur 8a      Zugmittelbaugruppe in Explosionsansicht
Figur 8b      Zugmittelbaugruppe in perspektivischer Darstellung
Figur 9a      Schaltung in Explosionsansicht
Figur 9b      Schaltung in perspektivischer Darstellung
Figur 10a      Schaltvorgang im Inneren der Abtriebswelle - 1. Position

Figur 10b    Schaltvorgang im Inneren der Abtriebswelle - 2. Position
Figur 10c    Schaltvorgang im Inneren der Abtriebswelle - 3. Position
Figur 11a    Stellung der Freilaufzähne - ausgekuppelt
Figur 11b    Stellung der Freilaufzähne - eingekuppelt
Figur 11c    Stellung der Freilaufzähne - Ausgangsstellung
Figur 12a    eine Ansicht des Getriebes unter Last
Figur 12b    eine Ansicht des Getriebes lastfrei

Die nachfolgend beschriebene Ausführung verwendet als Getriebestufen beispielhaft Zugmittelgetriebe. Die beschriebenen Mechanismen können jedoch ebenfalls für Zahnradgetriebe verwendet werden.

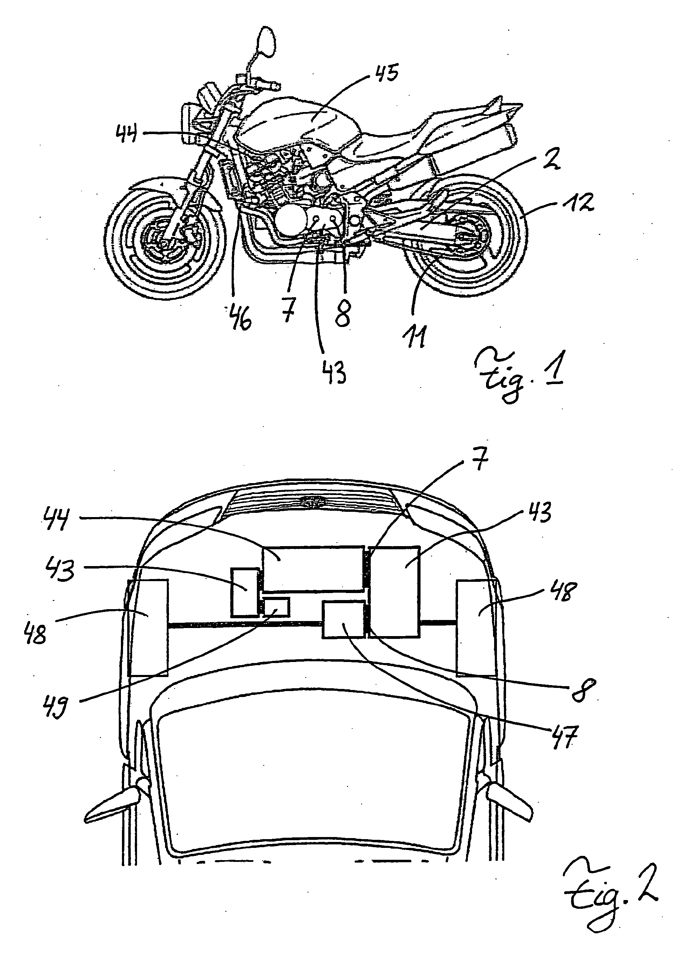

Figur 1 zeigt ein Motorrad mit dem neuartigen Getriebe in Seitenansicht. Man erkennt den Verbrennungsmotor 44 in klassischer Position unterhalb des Tanks 45 eingebaut und durch einen Rohrrahmen 46 umschlossen. Am Rohrrahmen 46 ist die Schwinge 2 gelagert. Am Ende der Schwinge 2 befindet sich das Hinterrad 12. Alle üblichen Teile eines Motorrades sind in der Skizze zu erkennen, auf die jedoch im Weiteren nicht näher eingegangen werden soll. Das neuartige Getriebe innerhalb des Getriebegehäuses 43 befindet sich in Fahrtrichtung hinter der Kurbelwelle. Die Eingangswelle 7 ist über einen nicht dargestellten Primärtrieb mit der parallel liegenden Kurbelwelle verbunden. Die Ausgangswelle 8 besitzt ein nicht dargestelltes Abtriebsritzel 4, welches das Drehmoment über die Kette 11 zum Hinterrad 12 überträgt.

Figur 2 zeigt die Umsetzung der Erfindung innerhalb eines Kraftwagens. Die Antriebskomponenten sind schematisch dargestellt. In der Ansicht von oben befindet sich ein klassischer Motor 44 quer zur Fahrtrichtung eingebaut. Das neuartige Getriebe innerhalb des Getriebegehäuses 43 ist mit der Eingangswelle 7 direkt zur Kurbelwelle verbunden. Die Ausgangswelle 8 übergibt das Drehmoment in ein Differentialgetriebe 47. Von hieraus werden beide Vorderräder 48 angetrieben. Auch Nebenaggregate 49 wie Lichtmaschine, Hydraulikpumpe für Servolenkung, Kühlventilatoren und ähnliches können über das neuartige Zugmittelgetriebe betrieben werden. Alle diese Einsatzbereiche sind in der Vergangenheit nur schwer als schaltbare Zugmittelgetriebe umsetzbar gewesen, da geeignete Zugmittel nicht zur Verfügung standen. Durch die Einführung neuartiger Zugmittel, insbesondere die Einführung von neuartigen Zahnriemen, ist es nun möglich, Getriebe mit einem Leistungsgewicht herzustellen, welche den klassisch aus Stahl gebauten Stirnradgetriebe oder Planetengetriebe ebenbürtig und sogar überlegen sind. Eine detaillierte technische Ausführung sei im Folgenden anhand eines Fahrrades dargestellt.

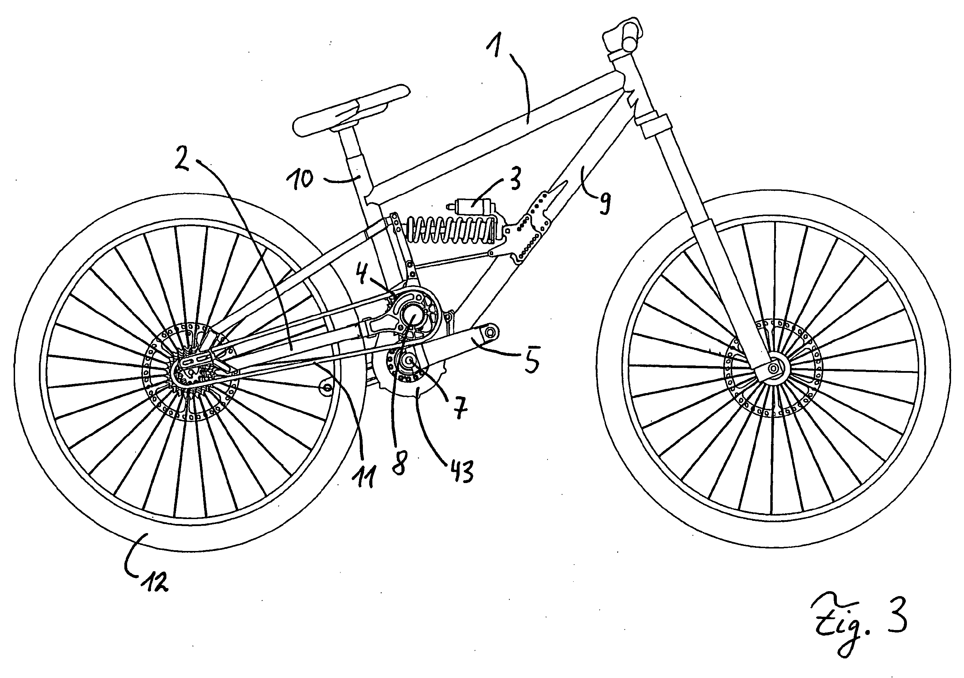

Figur 3 zeigt ein Fahrrad in Seitenansicht, in dessen Rahmen 1 das neuartige Zugmittelgetriebe innerhalb des Getriebegehäuses 43 mit den Tretkurbeln 5 angeordnet ist. An einem Gelenk ist die Hinterradschwinge 2 und ein Dämpferelement 3 am Rahmen oder am Getriebegehäuse befestigt. Aus dem Getriebegehäuse 43 herausgeführt sind die Eingangswelle 7 und die Ausgangswelle 8. Die Eingangswelle 7 ist mit den Tretkurbeln 5 verbunden. Außerhalb des Gehäuseteils 43 ist auf der Ausgangswelle 8 ein Abtriebsritzel 4 befestigt, mit dem über die Kette 11 das Hinterrad 12 angetrieben wird. Das Gehäuseteil 43 ist hier beispielhaft zwischen dem Sattelrohr 10 und dem Unterrohr 9 angebracht. Das Hinterrad 12 ist im Ausfallende der Schwinge 2 in üblicher Art und Weise gelagert.

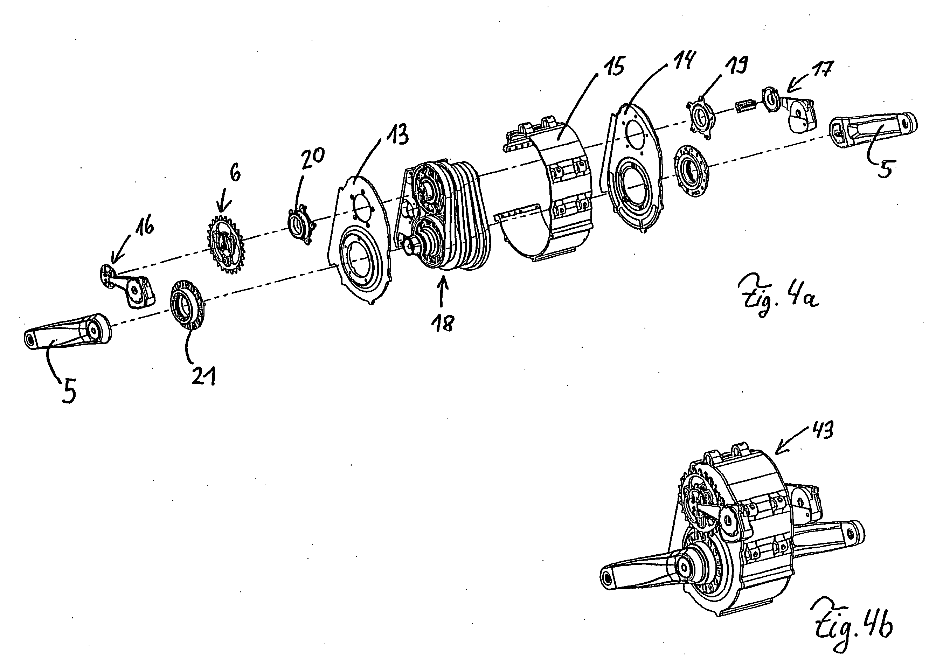

Im Folgenden wird eine beispielhafte Ausführung des neuartigen Zugmittelgetriebes mit Hilfe von Figur 4 bis Figur 12 näher beschrieben.

Das neuartige Zugmittelgetriebe 18 ist in einem mehrteiligen Gehäuse 43 untergebracht, das, wie **Figur 4a** und **4b** zeigt, aus einem rechten und einem linken Gehäusedeckel 13 und 14 sowie einem Gehäusemittelteil 15 besteht. In den Gehäusedeckeln 13 und 14 sind Schwingenlageraufnahmen 20 und 19 angeordnet, die die Verbindung zur Hinterradschwinge 2 (nicht sichtbar) darstellen. Darauf drehbar gelagert ist die Abtriebsritzelbaugruppe 6. Außerhalb der Abtriebsritzelbaugruppe 6 befinden sich die beiden Schaltansteuerungen 16 und 17. In den Gehäuseteilen 13 und 14 und koaxial mit der Eingangswelle 7, sind die Tretlagerexzenter 21 und 22 gelagert. Links und rechts der Tretlegerexzenter 21 und 22 befinden sich die Tretkurbeln 5, die mit einer Sechskantaufnahme verdrehfest mit dem Zugmittelgetriebe 18 befestigt sind und somit das Drehmoment übertragen können.

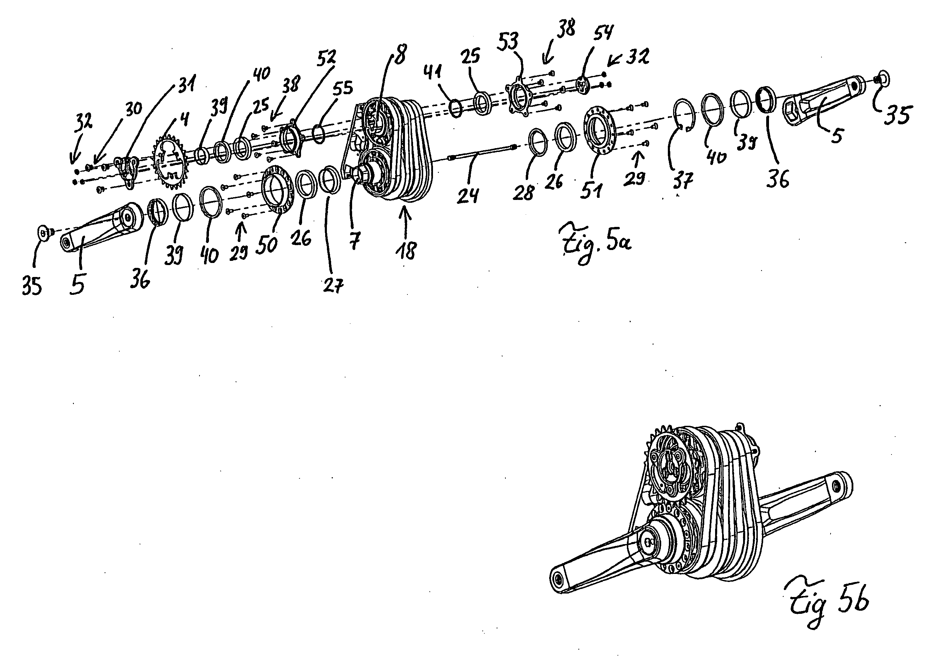

Figur 5 zeigt die Gehäuselagerung des neuartigen Zugmittelgetriebes im Detail. Auf der Eingangswelle 7 befindet sich Kugellager 26 angeordnet wobei diese wiederum in dem Tretlagerexzentergehäuse 50 und 51 angeordnet sind. Innerhalb der Exzentergehäuse 50 und 51 befinden sich die Anpressringe 27 und 28, die als Abstandhalter des Kugellagers 26 dienen. Außerdem befindet sich auf der linken Seite ein Sicherungsring 37, der die Kugellager gegen seitliches Verrutschen sichert. Auf beiden Seiten sind Dichtungen 40 und Dichtungslaufringe 39 auf den Tretlagermuttern 36 angebracht, die das Zugmittelgetriebe 18 vor Umwelteinflüssen schützen. Das Exzentergehäuse 50, 51 ist mit fünf Schrauben 29 an den Gehäusedeckeln 13 und 14 (nicht sichtbar) befestigt. Durch die drehbare Befestigung der Tretlagerexzenter 21 und 22 kann der Achsabstand von Eingangswelle 7 zu Ausgangswelle 8 variiert werden. Auf beiden Seiten sind die Antriebskurbeln 5 durch eine Sechskantaufnahme an der Welle befestigt und außerdem durch Langmuttern 35 und einer in der Welle befindlichen Zugstange 24 fixiert.

Die Abtriebswelle 8 befindet sich innerhalb des neuartigen Zugmittelgetriebes 18 und ist auf beiden Seiten durch Rillenkugellager 25 und einen Lagerdruckring 55 innerhalb der Schwingenlageraufnahmegehäuse 52 und 53 gelagert.

Fünf Schrauben 38 befestigen die zwei Schwingenlageraufnahmen 19 und 20 an den nicht dargestellten Gehäusedeckein 13 und 14.

Einen Schutz gegen äußere Umwelteinflüsse, wie Schmutz und Wasser, wird durch eine Dichtung 40 und einen Dichtungslaufring 39 erreicht, die sich ebenfalls in den Schwingenlageraufnahmegehäusen 52 und 53 befinden. Innerhalb der Abtriebswelle 8 befinden sich die drei in Figur 5a nur teilweise sichtbaren Mehrzahnachsen 23, die das Drehmoment über den Ritzelflansch 31 auf das Abtriebsritzel 4 weitergehen. Die Verbindung von Abtriebsritzel 4 zu Ritzelflansch 31 erfolgt über drei Schrauben 30. Damit die Abtriebswelle 8 im Gehäuse 43 axial fixiert ist, befestigt eine Abschlusskappe 54 auf der linken Seite das Rillenkugellager 25 sowie den Lagerdruckring 41 zur Schwingenlageraufnahmegehäuse 52 und 53 mit Hilfe von drei Muttern 32, die auf die bereits erwähnten Mehrzahnachsen 23 geschraubt werden.

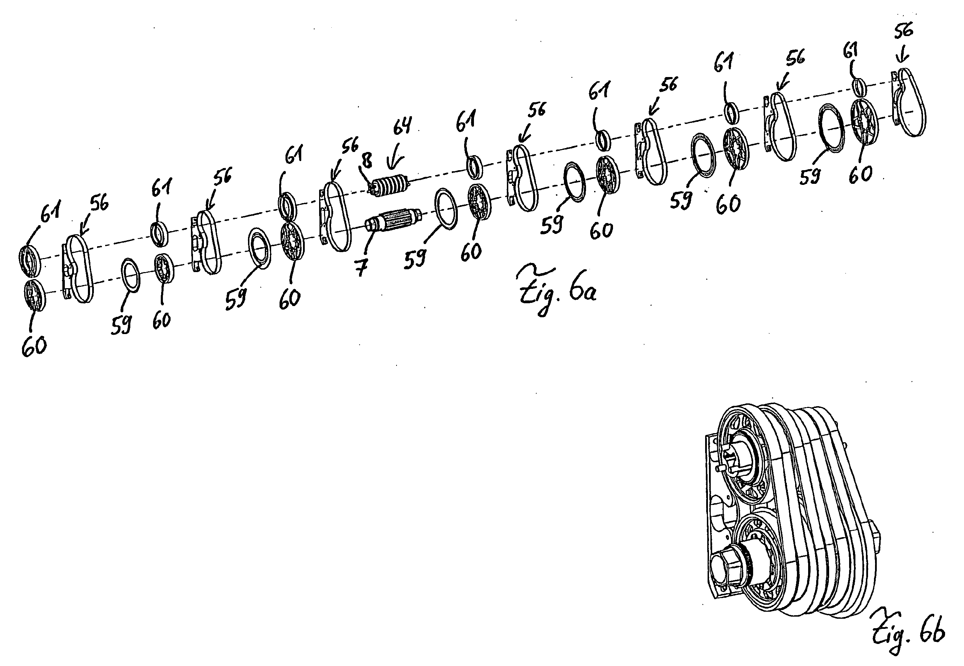

In **Figur 6a** und **Figur 6b** ist der Aufbau der Zugmittelscheiben 60 und 61 auf der Antriebswelle 7 und Abtriebswelle 8 dargestellt. Die Tretlagerwelle 7 ist durch das Keilwellenprofil verdrehfest mit den Antriebszugmittelscheiben 60 verbunden und somit gegen radiale Verschiebung gesichert. Die Bordscheiben 59 dienen als Abstandhalter und sichern die axiale Position der Antriebszugmittelscheiben 60 gegenüber den Zugmitteln 66 während des Betriebs. Die Abtriebszugmittelscheiben 61 sind deckungsgleich zu den Antriebszugmittelscheiben 60 auf der Ausgangswelle 8 gelagert. Die Zugmittelbaugruppen 56 umschließen die jeweils dazugehörigen Zugmittelscheiben 60 und 61.

Die Zugmittelscheiben 60 und 61 sind in Größe und Anordnung so gewählt, dass eine gleichmäßige Abstufung der einzelnen Gänge möglich ist. Auf der Tretlagerwelle 7 befinden sich jeweils die Antriebszugmittelscheiben 60 in folgender Reihenfolge und Zähnezahl 34, 31, 41, 38, 40, 45 und 49. Die Abtriebszugmittelscheiben 61 sind in folgender Reihenfolge und Zähnezahl: 34, 27, 31, 25, 23 und 22 befestigt. Diese Zähnezahlen sind nur beispielhaft zur Erläuterung der Konstruktion gewählt und können ebenfalls anders gewählt werden. Je nachdem, welche Abtriebszugmittelscheibe mit der Abtriebswelle durch einen noch zu beschreibenden Mechanismus eingekoppelt wird, erhält man eine unterschiedliche Übersetzung zwischen Antriebswelle und Abtriebswelle. In vorteilhafter Ausgestaltung werden die Zugmittel als faserverstärkte Zahnriemen ausgeführt.

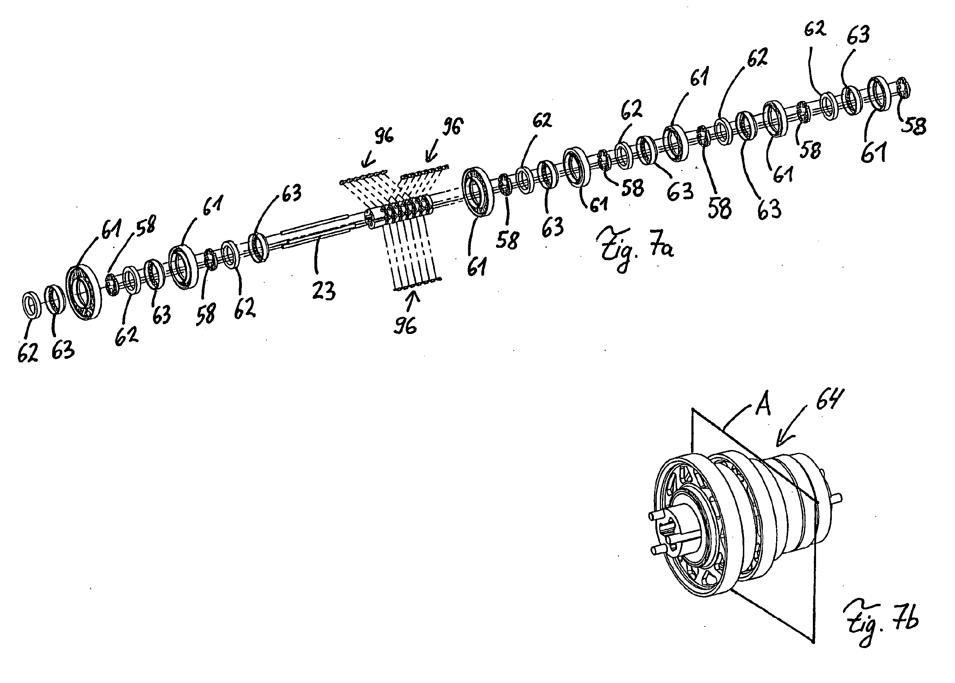

Der Aufbau der Abtriebswellenbaugruppe 65 ist in **Figur 7a** und **Figur 7b** gezeigt. Auf den drei Mehrzahnachsen 23 sind jeweils zwischen den Abtriebszugmittelscheiben 61 Freilaufzähne 58 gelagert. Die Bewegung der Freilaufzähne 58 auf der Mehrzahnachse 23 wird durch das in dieser Figur nicht sichtbare Schaltteil 87 gesteuert. In die Abtriebswelle 8 sind Axialkeile 96 eingelassen, um die Innenringe von Rillenkugellager 62 axial zu sichern und auf Abstand an bestimmten Positionen der Welle zu halten. Zwischen den Innenringen der Kugellager besitzt die Abtriebswelle 8 Vertiefungen, in denen die Freilaufzähne 58 Kippbewegungen ausführen können. Durch diese Kippbewegung kann eine formschlüssige Verbindung zwischen den Freilaufzähnen und einer Innenverzahnung von Freilaufkörpern 63 hergestellt werden. Diese Freilaufkörper 63 sind mit den Außenringen der Kugellager 62 verbunden und auf diese Weise drehbar auf der Welle gelagert. Die Freilaufkörper 63 selbst sind wiederum drehfest und mit den Abtriebszugmittelscheiben 61 verbunden. Auf diese Weise wird das Drehmoment von der Antriebswelle 7 wählbar über die unterschiedlichen Zugmittel 66 an die Abtriebswelle 8 weitergeleitet.

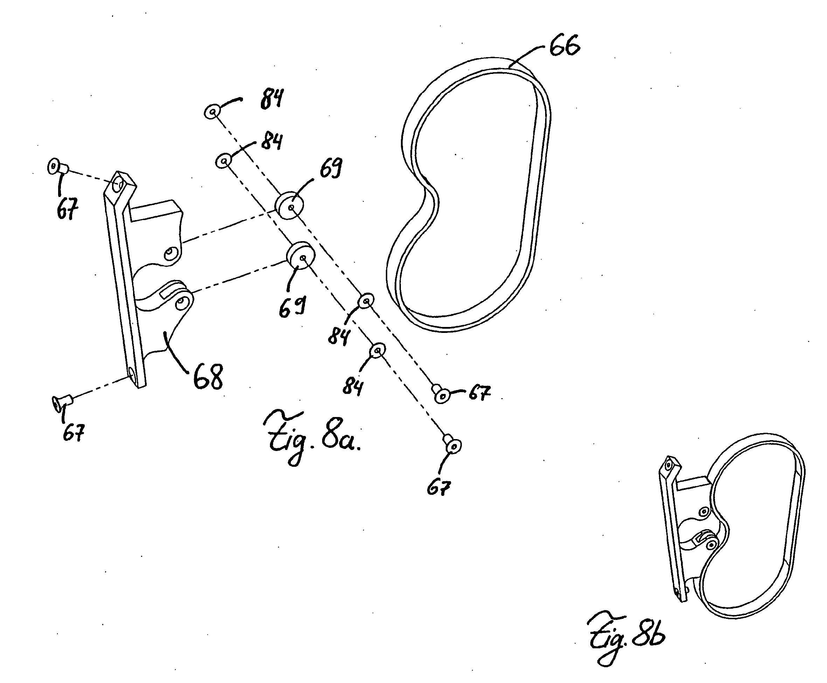

Die detaillierte Ansicht der Zugmittelbaugruppe 56 ist in **Figur 8a** und **Figur 8b** zu sehen. Die Zugmittelführung 68 drückt beispielsweise mit Hilfe von Andrücklagern 69 das Zugmittel 66 in Richtung der Zugmittelscheiben 60 und 61. Beilagscheiben 69 sichern den Abstand zur Befestigung 68 und Schrauben 67 fixieren die Andrücklager 69 an der Zugmittelführung 68. In vorteilhafter Ausführung sind die Zugmittel in ihrem Aufbau so ausgestaltet, dass nur ein Andrücklager notwendig ist, um das Zugmittel in die nierenförmige Kontur zu drücken.

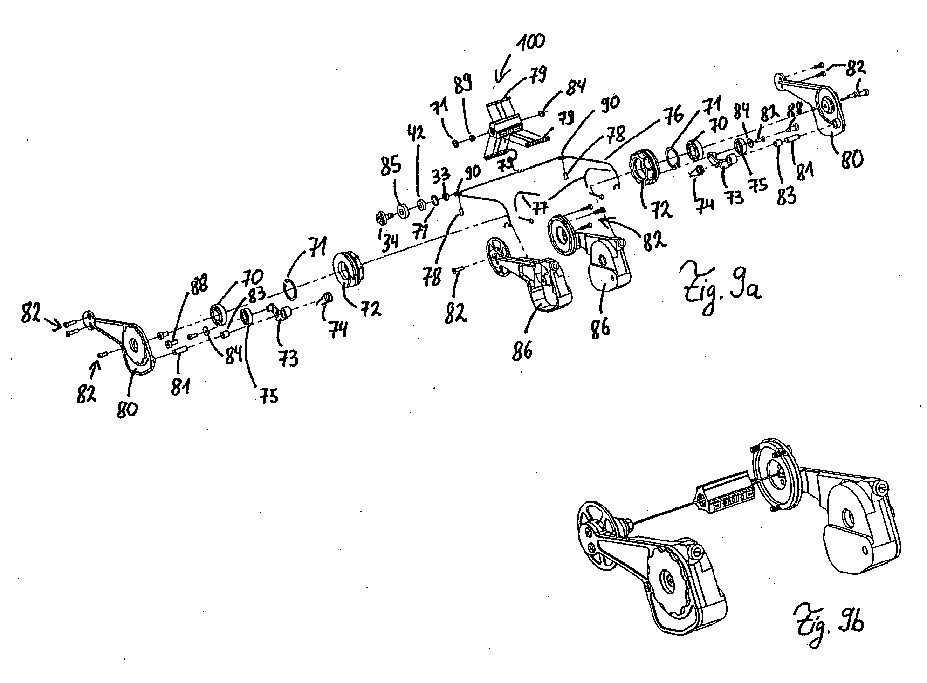

In **Figur 9a** und **Figur 9b** wird der Aufbau der Schaltansteuerung 16, 17 näher erläutert. Zwei Zuggehäuse 86, die außen am Getriebegehäuse 43 angeschraubt und durch die Zugdeckel 80 verschlossen sind, stehen durch einen Seilzug 76 in Verbindung. Das Schaltteil 87 ist mittig mit dem Seilzug 76 axial verbunden und, um Drehbarkeit des Schaltteils zu gewährleisten, mit zwei Radialkugellagern 89 gelagert. Der Seilzug 76 wird über die auf Stiften 78 gelagerten Umlenkrollen 90 innerhalb der nicht dargestellten Abtriebswelle 8 beidseitig zu den Zugspulen 72 geleitet. Die Zugspulen 72 befinden sich gelagert innerhalb der beiden Zuggehäuse 86. Zwei weitere Seilzüge 77 und 76 werden ebenfalls in das Zuggehäuse 86 eingeführt und dienen zur Ansteuerung der Schaltung vom Lenker. Beide Seilzüge 76 und 77 verlaufen in zwei parallel Rillen auf dem Umfang der Zugspule 72 und sind durch eine Klemmschraube 88 beziehungsweise durch einen zylinderförmigen Endkörper befestigt. Durch Drehung der Zugspulen werden auf diese Weise die Züge auf- bzw. abgewickelt und es kommt hierbei zu einer axialen Bewegung des Schaltteils 87 innerhalb der nicht dargestellten Abtriebswelle 8. Damit das Schaltteil 87 innerhalb der Abtriebswelle. 8 nur bestimmte und reproduzierbare Positionen einnehmen kann, befinden sich auf der Umfangsfläche der Zugspulen 72 Rastvertiefungen für den Rasthebel 73. Die Schenkelfelder 74 drücken das Radialkugellager 75 auf dem Rasthebel 73 gegen die wellenförmige Oberfläche der Zugspule 72. Durch die Mulden an der Zugspule 72 kann dieselbe nur an bestimmten Winkelpositionen eine Ruheposition einnehmen. Die Schenkelfelder 74 befinden sich auf einem Gleitlager 83 auf einem Stift 81. Eine Beilagscheibe 84 sichert den Abstand des Radialkugellagers 75 zum Zugdeckel 80, welcher mit Schrauben 82 am Zuggehäuse 86 befestigt ist. Erläuternd ist anzumerken, dass das Radialkugellager 70 im Inneren der Zugspule 72 die Drehbewegung der Spule ermöglicht und ein Sicherungsring 71 diese Lager gegen Verschieben sichert. Da der Seilzug 76 auch durch die nicht dargestellte Abtriebsritzelbaugruppe 6 geführt werden muss, ist eine hohle Spezialschraube 34 notwendig, die sich innerhalb des Dichtungsrings 85 befindet und über eine Mutter 33 befestigt wird. Durch diesen Gesamtaufbau kann der Benutzer mit Hilfe der Seilzüge 77 somit das Schaltteil 87 innerhalb der nicht dargestellten Abtriebswelle 8 axial auf sieben reproduzierbare Positionen bewegen. Beachtet man den Umstand, dass sich auf dem Schaltteil 87 zusätzlich auf drei Seiten jeweils fünf Magneten 79 befinden, so kann der Benutzer innerhalb der Abtriebswelle 8 sieben reproduzierbare Magnetfelder einregeln. Das Schaltteil 87 inklusive der darauf befindlichen Magnete 79 sei im Folgenden auch als Steuerschieber 100 bezeichnet.

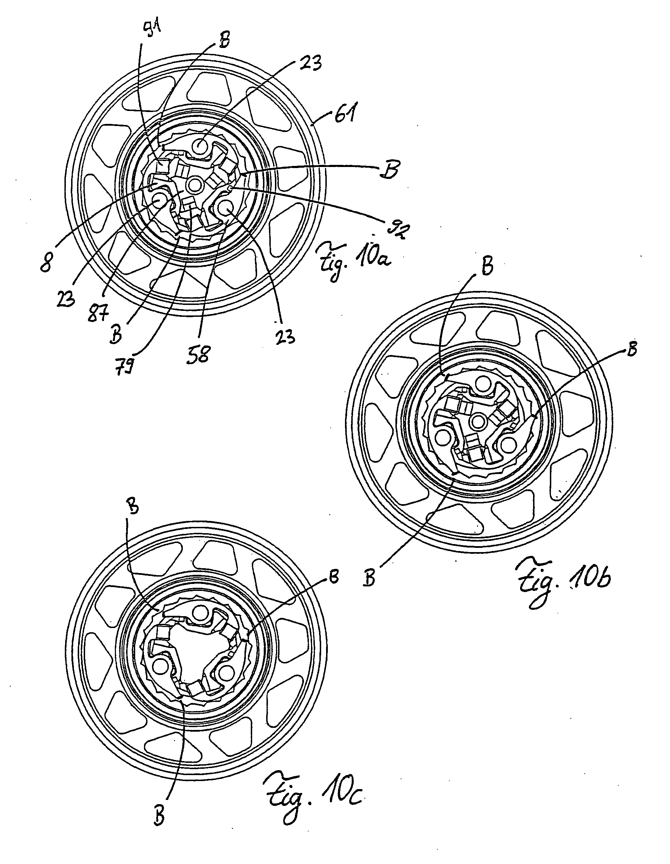

Innerhalb von Figur 7b ist die Schnittebene A dargestellt. **Figur 10a** stellt einen Schnitt durch die Abtriebswelle in dieser Ebene A zwischen zwei Zugmittelscheiben 61 dar. Pro Zahnriemenscheibe 61 ist ein Freilaufkörper 63 mit Innenverzahnung montiert. Man erkennt drei Freilaufzähne 58 symmetrisch innerhalb des Freilaufkörpers 63 angeordnet und auf den Mehrzahnachsen 23 kippbar gelagert. Die Freilaufzähne 58 sind in dieser Figur 10a in einem nicht eingekuppelten Zustand dargestellt. Die Kontaktfläche B des Freilaufzahns 58 befindet sich "entkoppelt" in einer gewissen Entfernung von der Innenverzahnung des Freilaufkörpers 63. Die geschnittene Abtriebswelle 8 trägt an den Anschlagflächen zwischen Abtriebswelle 8 und Freilaufzahn 58 kleine Haltemagnete 92, die dafür sorgen, dass die Freilaufzähne selbst bei Störungen von außen (Vibrationen etc.) ständig ein einem entkoppelten Zustand bleiben. Voraussetzung ist hierbei natürlich, dass der Freilaufzahn 51 aus einem magnetischen Material gefertigt ist. Das Schaltteil 87 ist mittig in der Figur erkennbar und ohne Seilzug 76 dargestellt. Ebenfalls symmetrisch zum Mittelpunkt befinden sich innerhalb des Schaltteils 87 die rechteckigen Magnete 79. Ihr Magnetfeld stößt in dieser Konfiguration die drei Freilaufzahnmagneten 91 nach außen. Da die Freilaufzahnmagneten 91 fest in die Freilaufzähne 58 eingebettet sind, wird auf diese Weise die Kippbewegung der drei Freilaufzähne 58 angesteuert. Die Mehrzahnachsen sind vorzugsweise aus Stahl gefertigt und übertragen das Drehmoment direkt bis zur Abtriebsritzelbaugruppe 6. Hierdurch werden übermäßige Materialspannungen aus der Abtriebswelle ferngehalten. Die beidseitige negative Polung der Freilaufzahnmagnete 91 und der Magnete 79 ist innerhalb der Figur 10a durch ein Minuszeichen dargestellt. Diesen Zustand aus Figur 10a kann man somit als "magnetisch entkuppelt" bezeichnen.

**Figur 10b** stellt ebenfalls einen Schnitt durch die Abtriebswelle in der Ebene A zwischen zwei Zugmittelscheiben 61 dar. Man erkennt auch hier die drei Freilaufzähne 58 symmetrisch innerhalb des Freilaufkörpers 63 angeordnet und auf den Mehrzahnachsen 23 kippbar gelagert. Die Freilaufzähne 58 sind in dieser Figur 10b jedoch in einem eingekuppelten Zustand dargestellt. Die Kontaktfläche B des Freilaufzahns 58 befindet sich "gekoppelt" in formschlüssiger Verbindung mit der Innenverzahnung des Freilaufkörpers 63. Die innerhalb der Abtriebswelle 8 angeordneten Haltemagnete 92 berühren die Freilaufzähne in dieser Position nicht. Das Schaltteil 87 ist mittig in der Figur erkennbar und ohne Seilzug 76 dargestellt. Ebenfalls symmetrisch zum Mittelpunkt befinden innerhalb des Schaltteils 87 die rechteckigen Magnete 79. Ihr Magnetfeld zieht in dieser Konfiguration die drei Freilaufzahnmagneten 91 nach innen. Da die Frelaufzahnmagneten 91 fest in die Freilaufzähne 58 eingebettet sind, wird auf diese Weise die Kippbewegung der drei Freilaufzähne 58 angesteuert. Die Innenverzahnung des Freilaufkörpers 63 ist so gestaltet, dass die Freilaufzähne nur ein Drehmoment übertragen können, falls sich die Zugmittelscheibe 61 im Uhrzeigersinn dreht. Bei einer Drehung entgegen dem Uhrzeigersinn arbeitet der Aufbau als Freilauf. Der Umstand, dass sich die Magneten gegenseitig anziehen, ist in Figur 10b durch ein Plus- und ein Minuszeichen dargestellt. Diesen Zustand aus Figur 10b kann man somit als "magnetisch gekuppelt" bezeichnen.

**Figur 10c** stellt ebenfalls einen Schnitt durch die Abtriebswelle in der Ebene A zwischen zwei Zugmittelscheiben 61 dar. Man erkennt auch hier die drei Freilaufzähne 58 symmetrisch innerhalb des Freilaufkörpers 63 angeordnet und auf den Mehrzahnachsen 23 kippbar gelagert. Die Freilaufzähne 58 sind in dieser Figur 10c jedoch, genau wie in Figur 10a, in einem ausgekuppelten Zustand dargestellt. Die Kontaktfläche B des Freilaufzahns 58 befindet sich "entkoppelt" in einem Abstand von der Innenverzahnung des Freilaufkörpers 63. Die innerhalb der Abtriebswelle 8 angeordneten Haltemagnete 92 berühren die aus Stahl gefertigten und somit magnetischen Freilaufzähne 58 und halten diese fest in Position. Das Schaltteil befindet sich hier nicht unter den Freilaufzähnen 58, sondern axial verschoben innerhalb einer anderen Zugmittelscheibe. Diesen Zustand aus Figur 10c kann man somit als "frei entkuppelt bezeichnen. Erläuternd ist anzumerken, dass diese Kupplungsmittel grundsätzlich auf jeder Welle eines Getriebes angeordnet werden können. Beispielhaft ist hier das Kupplungsmittel auf der Ausgangswelle dargestellt.

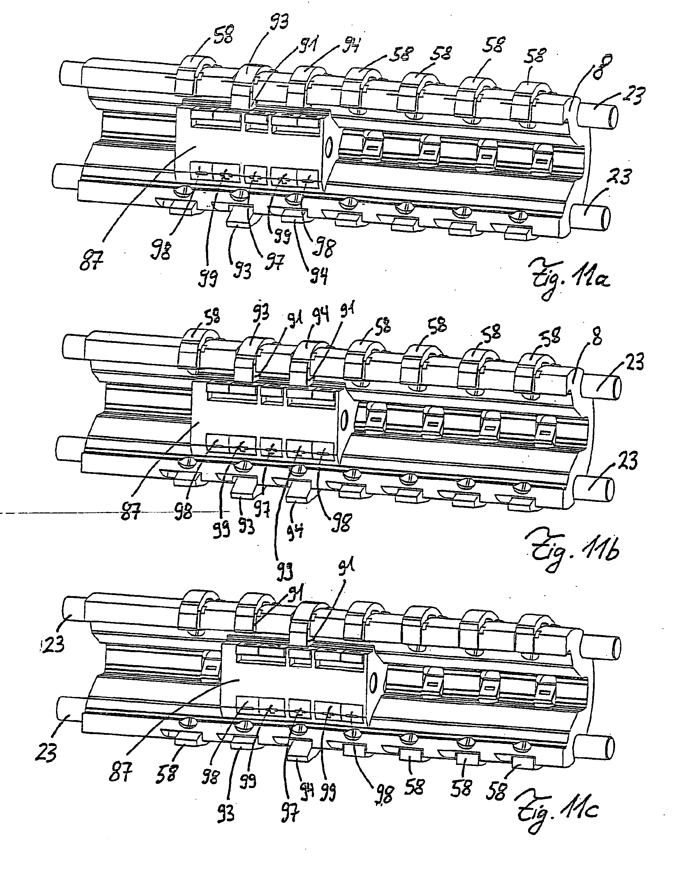

Der Schaltvorgang im Detail ist beispielhaft in Figur 11a, 11 bund 11 c dargestellt. **Figur 11a** stellt die Abtriebswelle 8 mit den 7 Kupplungsmitteln längs geschnitten ohne die Freilaufkörper 63 und ohne die Zugmittelscheiben 61 dar. Die bereits in Figur 9 beschriebene Schaltansteuerung beschränkt sich auf die Darstellung des Schaltteils 87, in dem die Magneten 79 eingefügt sind. Die Polung der Magneten ist durch ein Plus- und ein Minuszeichen dargestellt. Ebenfalls erkennbar sind zwei von drei Mehrzahnachsen 23, die im Folgenden oft auch als Stahlachsen bezeichnet werden. Auf diesen Mehrzahnachsen 23 können die Freilaufzähne 58 Kippbewegungen ausführen. Allgemein gesagt ist hier innerhalb mindestens ein Bauteil relativ zu einer Verzahnung drehbar oder verschiebbar gelagert.

Der mittlere Magnet 97 befindet sich mit seiner positiven Seite zum Freilaufzahn ausgerichtet fest in das Schaltteil 87 eingefügt. Das Schaltteil 87 befindet sich in der Darstellung genau mittig unter dem eingekuppelten Freilaufzahn 93. Der Freilaufzahnmagnet 91 ist mit seinem negativen Pol zum Schaltteil 97 gerichtet und wird somit angezogen. Durch die Wippenform der Freilaufzähne wird hierdurch die Kontaktfläche B aus der Darstellung in Figur 10a in die Innenverzahnung des nicht dargestellten Freilaufkörpers gedrückt. Auf diese Weise wird zwischen der Eingangswelle und der Ausgangswelle durch dieses formschlüssige Kupplungsmittel eine drehfeste Verbindung hergestellt. Oder allgemein gesagt kann innerhalb des Kupplungsmittels mindestens ein Bauteil in einer Verzahnung eine formschlüssige Position einnehmen. An beiden Aussenkanten des Schaltteils 87 sind ebenfalls Magneten 98 eingefügt, die jedoch mit ihrer negativen Seite in Richtung der Freilaufzähne 93 ausgerichtet sind. Durch diese Ausrichtung wird der Freilaufzahnmagnet 91 mit seinem negativen Pol vom Schaltteil 97 abgestoßen und auf diese Weise aktiv entkoppelt. Direkt neben den negativ gepolten Magneten 98 befinden sich die so genannten Überschneidungsmagneten 99, die mit ihrer positiven Seite zum Freilaufzahn ausgerichtet fest in das Schaltteil 87 eingefügt sind. Die Überschneidungsmagneten 99 haben in dieser Figur 11a keinen Einfluss auf die Freilaufzähne 58, 93 und 94. In dieser Figur 11 a ist somit der zweite Gang von links eingelegt. Zusätzlich ist anzumerken, dass sich das Schaltteil in dieser Figur 11a an einem Rastpunkt befindet und deswegen der zweite Gang in einem eingerasteten Zustand befindet.

Figur 11b zeigt den Schaltvorgang von diesem Gang zwei in den Gang drei. Betrachtet man den dritten Freilaufzahn 94 von der linken Seite, so ist der Einkupplungsvorgang von Gang drei gleichbedeutend mit der Kippbewegung dieses Freilaufzahnes 94. Man erkennt ebenfalls in der Figur 11b das Schaltteil 87 während seiner Bewegung nach rechts. Sobald das Schaltteil 87 bereits einen gewissen Weg zurückgelegt hat, bewirken die Überschneidungsmagneten 99 bereits den Einkuppelungsvorgang des Freilaufzahnes 94. In dieser Situation befindet sich der Freilaufzahn 93 jedoch noch immer im Eingriff. Da aufgrund der unterschiedlichen Übersetzungen innerhalb der einzelnen Getriebestufen nicht beide Freilaufzähne Kräfte übertragen können, arbeitet in diesem Moment einer der beiden Freilaufzähne 93 und 94 in seiner Freilauffunktion uns springt für den Nutzer unmerklich in der Innenverzahnung über. An dieser Stelle ist es jedoch wichtig herauszustellen, dass das Getriebe aus diesem Grunde nicht in der Lage ist, eine Leerlaufposition einzunehmen. Zusätzlich ist anzumerken, dass sich das Schaltteil in dieser Figur 11b nicht an einem Rastpunkt befindet und durch den in Figur 9 beschriebenen Mechanismus gezwungen wird, die in Figur 11 c dargestellte Position einzunehmen.

**Figur 11c** zeigt den abgeschlossenen Schaltvorgang von Gang zwei in Gang drei. Betrachtet man den zweiten Freilaufzahn 93 von der linken Seite, so ist er von dem negativ gepolten Magneten auf dem Schaltteil aus dem Formschluss des Freilaufkörpers herausgedrückt worden. Allgemein gesagt kann hier innerhalb des Kupplungsmittels mindestens ein Bauteil eine Position in einem Abstand relativ zu einer Verzahnung einnehmen. Man erkennt ebenfalls in der Figur 11c das Schaltteil 87 wieder genau mittig in seiner Rastposition unter dem dritten Freilaufzahn 94. Der Schaltprozess ist somit abgeschlossen. Hiermit sei beispielhaft an diesem 7-Gang Mehrfachgetriebe gezeigt, dass durch die Neuheit eine Schaltbarkeit unter Last sowie eine Schaltbarkeit im Stand erreicht werden kann. Ebenso wird deutlich, dass das unbeabsichtigte Einlegen eines Leerlaufs ebenfalls unmöglich ist. Die Figur 11 zeigt somit beispielhaft, dass die Neuheit vorteilhaft zusätzlich dadurch gekennzeichnet ist, dass mindestens ein Bauteil eine Position in einem Abstand relativ zu einer Verzahnung einnimmt, nachdem sich zwei gleich gepolte Magnetfelder aufeinander zu bewegt haben.

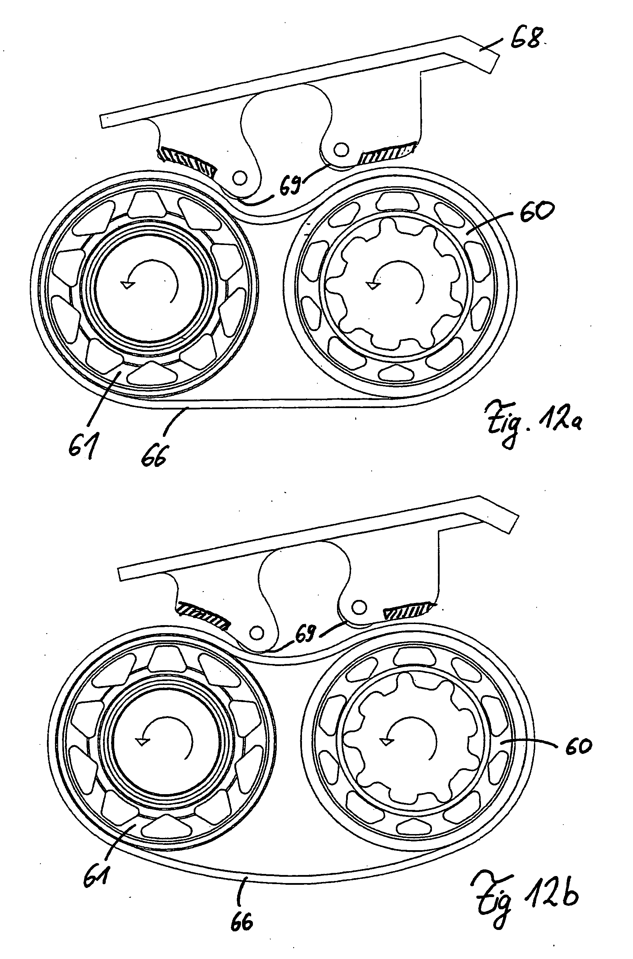

Figur 12 zeigt eine Getriebeübersetzung mit einem Zugmittel 66 und einer Zugmittelscheibe 60 für den Antrieb und einer Zugmittelscheibe 61 für den Abtrieb. Vorzugsweise ist das Zugmittel 66 als Zahnriemen sowie die Zugmittelscheiben 60 und 61 als Zahnriemenscheiben ausgebildet. Dieser Umstand ist jedoch in der Figur nicht dargestellt. Die **Figur 12a** zeigt die Getriebeübersetzung im belasteten Zustand.

Man erkennt, dass die Andrücklager 9 in diesem Lastzustand das Zugmittel nicht berühren. Dieses verhindert ein Überspringen des Zahnriemens auf den Zahnriemenscheiben, denn eine Verstärkung der Last führt zu einer Erhöhung des Umschlingungswinkels und auch zu einer verstärkten konkaven Wölbung des Leertrums. Ohne Last jedoch versucht der Zahnriemen, wie in **Figur 12b** dargestellt, durch seine Eigenspannung im Last- und im Leertrum eine konvexe Form zu bilden. Dieses jedoch wird auf der Leertrumseite durch das Andrücklager verhindert.

Allgemein gesagt wird so während lastfreier Rotation durch mindestens ein Bauteil das Zugmittel in eine nierenähnliche Form gedrückt. Auf der Lasttrumseite erreicht der Riemen in der Figur 12b deutlich sichtbar seine konvexe Form.

Das Überspringen des Zahnriemens auf den Zahnriemenscheiben wird so auf vorteilhafte Weise verhindert, indem die nierenähnliche Form der Zugmittel unter Last durch eine gerade Form des Lasttrums und durch eine verstärkte konkave Wölbung des Leertrums gebildet wird. Wenn Laststöße und Störgrößen von außen auf das Getriebe wirken, kann dieses zu einem Abheben des Zahnriemens von den Zahnriemenrädern führen. In Figur 12a und 12b sind Bereiche schraffiert gezeichnet, die auf der Leertrumseite zusätzliche Führungen berührungslos in unmittelbarer Nähe der Zahnriemen bilden und ähnlich der Außenkontur des Zahnriemens geformt sind. Diese Führungen verhindern das vollständige Austreten der Zahnriemen aus den Zahnriemenscheiben und verhindern somit Beschädigungen am Riemen durch Quetschwirkung zwischen Andrückrolle und Zahnriemenscheibe.

Bezugszeichenliste

1    Hauptrahmen
2    Hinterradschwinge

| 3 | Dämpferelement |
|---|---|
| 4 | Abtriebsritzel |
| 5 | Tretkurbeln |
| 6 | Abtriebsritzelbaugruppe |
| 7 | Antriebswelle / Eingangswelle |
| 8 | Abtriebswelle / Ausgangswelle |
| 9 | Unterrohr |
| 10 | Sattelrohr |
| 11 | Kette |
| 12 | Hinterrad |
| 13 | Gehäusedeckel rechts |
| 14 | Gehäusedeckel links |
| 15 | Gehäuseteilmitte |
| 16 | Schaltansteuerung rechts |
| 17 | Schaltansteuerung links |
| 18 | Zugmittelgetriebe |
| 19 | Schwingenlageraufnahme links |
| 20 | Schwingenlageraufnahme rechts |
| 21 | Tretlagerexzenter rechts |
| 22 | Tretlagerexzenter links |
| 23 | Mehrzahnachsen |
| 24 | Zugstange |
| 25 | Rillenkugellager |
| 26 | Rillenkugellager |
| 27 | Anpressring rechts |
| 28 | Anpressring links |
| 29 | Schraube |
| 30 | Schraube |
| 31 | Ritzelflansch |
| 32 | Mutter |
| 33 | Mutter (Schaltung) |
| 34 | Spezialschraube (Schaltung) |
| 35 | Langmutter |
| 36 | Tretlagermutter |
| 37 | Sicherungsring |
| 38 | Schraube |
| 39 | Dichtungslaufring |
| 40 | Dichtung |
| 41 | Lagerdruckring |
| 42 | Rillenkugellager |
| 43 | Zugmittel-/Getriebegehäuseteil |
| 44 | Verbrennungsmotor |
| 45 | Tank |
| 46 | Rohrrahmen |
| 47 | Differentialgetriebe |
| 48 | Vorderrad |
| 49 | Nebenaggregate |
| 50 | Tretlagerexzentergehäuse rechts |
| 51 | Tretlagerexzentergehäuse links |
| 52 | Schwingenlageraufnahmegehäuse rechts |
| 53 | Schwingenlageraufnahmegehäuse links |
| 54 | Abschlusskappe |
| 55 | Lagerdruckring |
| 56 | Zugmittelbaugruppe |
| 57 | Schraube |
| 58 | Freilaufzahn |
| 59 | Bordscheibe |
| 60 | Zugmittelscheibe (Antrieb) |

61 Zugmittelscheibe (Abtrieb)
62 Rillenkugellager
63 Freilaufkörper
64 Abtriebswellenbaugruppe
65 Antriebswellenbaugruppe
66 Zugmittel
67 Schraube
68 Zugmittelführung
69 Andrücklager
70 Radialkugellager
71 Sicherungsring
72 Zugspule
73 Rasthebel
74 Schenkelfeder
75 Radialkugellager (klein)
76 Seilzug (Getriebe)
77 Seilzug (Schalthebel)
78 Stift
79 Magnet (Schaltteil)
80 Zugführungsdeckel
81 Stift
82 Schraube
83 Gleitlager
84 Beilagscheibe
85 Dichtungsring
86 Zuggehäuse
87 Schaltteil
88 Klemmschraube
89 Radialkugellager
90 Umlenkrolle
91 Freilaufzahnmagnet
92 Haltemagnet
93 Freilaufzahn
94 Freilaufzahn
95 Magnet
96 Axialkeil
97 Magnet mit Pluspol
98 Magnet mit Minuspol
99 Überschneidungsmagnet
100 Steuerschieber

**Patentansprüche**

1. Zugmittelgetriebe (18) für Fahrzeuge oder für den Einsatz in der Antriebstechnik mit einer an einem Gestell gelagerten Eingangswelle (7) und Ausgangswelle (8), wobei die Eingangswelle (7) und die Ausgangswelle (8) aus dem Gestell herausgeführt sind, umfassend:

zwischen der Eingangswelle (7) und der Ausgangswelle (8) befindet sich eine Getriebeübersetzung mit Getrieberädern, die als ein Zugmittelgetriebe ausgeführt ist,
alle Getrieberäder befinden sich während des Betriebs ständig in Rotation,
die zwischen der Eingangswelle (7) und der Ausgangswelle (8) befindliche Getriebeübersetzung ist als Zugmittelgetriebe Zahnriemen als Zugmittel (66) und mit Zahnriemenscheiben (60, 61) als Getrieberäder ausgeführt,
**dadurch gekennzeichnet dass**
der Zahnriemen während lastfreier Rotation auf den Zahnriemenscheiben (60, 61) durch mindestens ein Bauteil (68) in eine nierenähnliche Form gedrückt wird und dass unter Lasteinwirkung dieses mindestens ein Bauteil (68) den Zahnriemen (66) nicht berührt, und
die nierenähnliche Form des Zahnriemens (66) während lastfreier Rotation durch eine konvexe Wölbung eines Lasttrums und durch eine konkave Wölbung eines Leertrums gebildet wird, und
die nierenähnliche Form des Zahnriemens (66) unter Last durch eine gerade Form des Lasttrums und durch eine verstärkte konkave Wölbung des Leertrums gebildet wird.

2.  Getriebe nach Anspruch 1, wobei
    die Zahnriemen (66) durch Aramid, Kevlar, Kohlefaser oder andere Faserwerkstoffe verstärkt sind.

3.  Getriebe nach Anspruch 1 oder 2, wobei die Zahnriemenscheiben (60, 61) sich drehbar gelagert auf der Eingangswelle (7) oder der Ausgangswelle (8) befinden, wobei die Zahnriemenscheiben (60, 61) durch einen Kupplungsmechanismus drehfest mit der Ausgangswelle oder der Eingangswelle (7, 8) verbindbar sind.

4.  Getriebe nach Anspruch 3, wobei innerhalb des Kupplungsmechanismus mindestens ein Bauteil relativ zu einer Verzahnung drehbar oder verschiebbar gelagert ist.

5.  Getriebe nach Anspruch 3, wobei innerhalb des Kupplungsmechanismus mindestens ein Bauteil in einer Verzahnung eine formschlüssige Position einnehmen kann.

6.  Getriebe nach Anspruch 3, wobei innerhalb des Kupplungsmechanismus mindestens ein Bauteil eine Position in einem Abstand relativ zu einer Verzahnung einnehmen kann.

7.  Getriebe nach Anspruch 3, wobei mindestens ein Bauteil innerhalb des Kupplungsmechanismus die Eigenschaften eines Permanentmagneten (79) mit einem magnetischen Nord- und Südpol besitzt.

8.  Getriebe nach Anspruch 3, wobei ein Zustand des Kupplungsmechanismus sich durch eine Veränderung eines zusätzlichen Magnetfelds innerhalb oder in unmittelbarer Nähe des Kupplungsmechanismus verändert.

9.  Getriebe nach Anspruch 2 oder 3, wobei sich während mindestens eines Schaltvorgangs ein Zustand von mindestens zwei Kupplungsmechanismen gleichzeitig ändert.

10. Getriebe nach Anspruch 3, wobei mindestens ein Kupplungsmechanismus nur Drehmomente in eine Drehrichtung übertragen kann.

11. Getriebe nach Anspruch 4, wobei mindestens ein Bauteil eine Position in einem Abstand relativ zu einer Verzahnung einnimmt, nachdem sich zwei gleich gepolte Magnetfelder aufeinander zu bewegt haben.

12. Getriebe nach Anspruch 4, wobei ein formschlüssiger Kupplungsmechanismus durch Freilaufzähne (58) gebildet wird, die in eine Verzahnung eingreifen können.

13. Getriebe nach Anspruch 12, wobei die Verzahnung als Innenverzahnung ausgeführt ist.

14. Getriebe nach Anspruch 12, wobei die Freilaufzähne (58) symmetrisch zur Verzahnung angeordnet sind.

15. Getriebe nach Anspruch 12, wobei die Freilaufzähne (58) kippbar auf Stahlachsen (23) innerhalb der Ausgangswelle (8) gelagert sind, auf der sich der Kupplungsmechanismus befindet.

16. Getriebe nach Anspruch 4, wobei mindestens ein Kupplungsmechanismus aus einem Permanentmagneten und einem Stahlbauteil zusammengefügt ist.

17. Getriebe nach Anspruch 8, wobei eine Veränderung des zusätzlichen Magnetfelds durch axiale Verschiebung von Permanentmagneten entlang der Drehachse einer Welle erreicht wird, auf welcher sich der Kupplungsmechanismus befindet.

18. Getriebe nach Anspruch 17, wobei eine axiale Verschiebung von Permanentmagneten innerhalb der Ausgangswelle, die hohl ist vollzogen wird.

19. Getriebe nach Anspruch 17, wobei die axiale Verschiebung von Permanentmagneten außerhalb der Eingangswelle (7) vollzogen wird.

**20.** Getriebe nach Anspruch 17, wobei die Permanentmagneten (79), die axial verschoben werden, in ein Steuerschieberbauteil (100) eingefügt sind.

**21.** Getriebe nach Anspruch 20, wobei die Permanentmagneten (79) in unterschiedlicher Polung in das Steuerschieberbauteil (100) eingefügt sind.

**22.** Getriebe nach Anspruch 20, wobei sich innerhalb des Steuerschieberbauteils (100) eine Lagerung (89) befindet.

**23.** Getriebe nach Anspruch 20, wobei das Steuerschieberbauteil (100) für die axiale Bewegung mit einem Zahnriemen in Verbindung steht.

**24.** Getriebe nach Anspruch 20, wobei das Steuerschieberbauteil (100) innerhalb seiner axialen Bewegung gegenüber der Ausgangswelle oder der Eingangswelle (7, 8) Rastpunkte einnimmt.

**25.** Getriebe nach Anspruch 15, wobei eine gekippte Lage des Freilaufzahns (58) auf den Stahlachsen (23) durch einen Permanentmagneten gehalten wird.

**26.** Getriebe nach Anspruch 25, wobei der Permanentmagnet in eine Welle eingefügt ist, auf welcher sich der Kupplungsmechanismus befindet.

**27.** Getriebe nach Anspruch 3, wobei die formschlüssige drehfeste Verbindung zwischen die Eingangswelle oder die Ausgangswelle und Zahnriemenscheibe mit Hilfe von Energie aufgehoben werden kann, die zeitlich vor dem Entkoppeln in einem Magnetfeld gespeichert wurde.

**28.** Getriebe nach Anspruch 8, wobei die Veränderung des zusätzlichen Magnetfelds innerhalb oder in der unmittelbaren Nähe des Kupplungsmechanismus durch Elektromagneten vollzogen wird.

**29.** Getriebe nach Anspruch 1 oder 2, wobei das Gestell der Getriebeübersetzungen als geschlossenes Gehäuse (43) ausgeführt sind.

**30.** Getriebe nach Anspruch 2, wobei die Faserwerkstoffe mit Polyurethan umhüllt sind.

**31.** Getriebe nach Anspruch 1 oder 2, wobei die Zahnriemen während des Schaltvorgangs ihre Riemenspannung ändern.

**32.** Getriebe nach Anspruch 1 oder 2, wobei die Zahnriemen während des Schaltvorgangs ihren Umschlingungswinkel auf der Zahnriemenscheibe ändern.

**33.** Getriebe nach Anspruch 1 oder 2, wobei das mindestens eine Bauteil, das die Zahnriemen in eine nierenförmige Form drückt, als Rolle ausgebildet ist.

**34.** Getriebe nach Anspruch 1 oder 2, wobei sich auf der Leertrumseite zusätzliche Führungen berührungslos in unmittelbarer Nähe der Zahnriemen (66) befinden und ähnlich der Außenkontur des Zahnriemens geformt sind.

**Claims**

**1.** Traction mechanism (18) for vehicles or for use in drive technology having an input shaft (7) and an output shaft (8) mounted on a frame, wherein the input shaft (7) and the output shaft (8) are made to extend out of the frame, comprising:

a transmission which has gearwheels and is embodied as a traction mechanism is located between the input shaft (7) and the output shaft (8),
all the gearwheels rotate continuously during operation,
the transmission, which is located between the input shaft (7) and the output shaft (8), is embodied as a traction mechanism with a toothed belt as the traction means (66) and with toothed-belt wheels (60, 61) as gearwheels,
**characterized in that**
during load-free rotation on the toothed-belt wheels (60, 61) the toothed belt is pressed into a kidney-like shape by at least one component (68), and **in that** under the load effect this at least one component (66) is not in contact with the toothed belt (66), and

the kidney-like shape of the toothed belt (66) is formed during load-free rotation by convex curvature of a tight-side span and by concave curvature of a slack-side span, and

the kidney-like shape of the toothed belt (66) is formed under load by a straight shape of the tight-side span and by amplified concave curvature of the slack-side span.

2.  Mechanism according to Claim 1, wherein
the toothed belts (66) are reinforced by aramide, Kevlar, carbon fibre or other fibrous materials.

3.  Mechanism according to Claim 1 or 2, wherein the toothed-belt wheels (60, 61) are located mounted rotatably on the input shaft (7) or the output shaft (8), wherein the toothed-belt wheels (60, 61) can be connected in a rotationally fixed fashion to the output shaft or the input shaft (7, 8) by means of a coupling mechanism.

4.  Mechanism according to Claim 3, wherein at least one component is mounted inside the coupling mechanism so as to be rotatable or displaceable in relation to a toothing arrangement.

5.  Mechanism according to Claim 3, wherein at least one component can assume a positively locking position in a toothing arrangement inside the coupling mechanism.

6.  Mechanism according to Claim 3, wherein at least one component can assume a position at a distance in relation to a toothing arrangement inside the coupling mechanism.

7.  Mechanism according to Claim 3, wherein at least one component inside the coupling mechanism has the properties of a permanent magnet (79) with a magnetic North pole and South pole.

8.  Mechanism according to Claim 3, wherein a state of the coupling mechanism changes as a result of a change in an additional magnetic field inside or in the direct vicinity of the coupling mechanism.

9.  Mechanism according to Claim 2 or 3, wherein during at least one shifting process a state of at least two coupling mechanisms changes simultaneously.

10. Mechanism according to Claim 3, wherein at least one coupling mechanism can only transmit torques in one rotational direction.

11. Mechanism according to Claim 4, wherein at least one component assumes a position at a distance in relation to a toothing arrangement after two magnetic fields with the same polarity have moved towards one another.

12. Mechanism according to Claim 4, wherein a positively locking coupling mechanism is formed by free-wheeling teeth (58) which can engage in a toothing arrangement.

13. Mechanism according to Claim 12, wherein the toothing arrangement is embodied as an internal toothing arrangement.

14. Mechanism according to Claim 12, wherein the free-wheeling teeth (58) are arranged symmetrically with respect to the toothing arrangement.

15. Mechanism according to Claim 12, wherein the free-wheeling teeth (58) are mounted in a tiltable fashion on steel axles (23) inside the output shaft (8) on which the coupling mechanism is located.

16. Mechanism according to Claim 4, wherein at least one coupling mechanism is assembled from a permanent magnet and a steel component.

17. Mechanism according to Claim 8, wherein a change in the additional magnetic field is brought about by axial displacement of permanent magnets along the rotational axis of a shaft on which the coupling mechanism is located.

18. Mechanism according to Claim 17, wherein axial displacement of permanent magnets is carried out inside the output shaft which is hollow.

19. Mechanism according to Claim 17, wherein the axial displacement of permanent magnets is carried out outside the input shaft (7).

20. Mechanism according to Claim 17, wherein the permanent magnets (79) which are displaced axially are inserted into a control slide component (100).

21. Mechanism according to Claim 20, wherein the permanent magnets (79) are inserted into the control slide component (100) with different polarity.

22. Mechanism according to Claim 20, wherein a bearing (89) is located inside the control slide component (100).

23. Mechanism according to Claim 20, wherein the control slide component (100) is connected to a toothed belt for the axial movement.

24. Mechanism according to Claim 20, wherein the control slide component (100) assumes latched points inside its axial movement with respect to the output shaft or the input shaft (7, 8).

25. Mechanism according to Claim 15, wherein a titled position of the free-wheeling tooth (58) on the steel axles (23) is held by a permanent magnet.

26. Mechanism according to Claim 25, wherein the permanent magnet is inserted into a shaft on which the coupling mechanism is located.

27. Mechanism according to Claim 3, wherein the positively locking rotationally fixed connection between the input shaft or the output shaft and the toothed-belt wheel can be eliminated using energy which was stored before the decoupling in a magnetic field.

28. Mechanism according to Claim 8, wherein the change in the additional magnetic field is carried out inside or in the direct vicinity of the coupling mechanism by means of electromagnets.

29. Mechanism according to Claim 1 or 2, wherein the frame of the transmissions are embodied as a closed housing (43).

30. Mechanism according to Claim 2, wherein the fibrous materials are encased with polyurethane.

31. Mechanism according to Claim 1 or 2, wherein the toothed belts change their belt tension during the shifting process.

32. Mechanism according to Claim 1 or 2, wherein the toothed belts change their wrap-around angle on the toothed-belt wheel during the shifting process.

33. Mechanism according to Claim 1 or 2, wherein the at least one component which presses the toothed belts into a kidney-like shape is embodied as a roller.

34. Mechanism according to Claim 1 or 2, wherein additional guides are located on the slack-side span without contact in the direct vicinity of the toothed belts (66) and are shaped similarly to the outer contour of the toothed belt.

**Revendications**

1. Transmission à moyen de traction (18) pour véhicules ou pour l'utilisation dans la technique d'entraînement avec un arbre d'entrée (7) monté sur un bâti et un arbre de sortie (8), l'arbre d'entrée (7) et l'arbre de sortie (8) étant guidés hors du bâti, comprenant :

   entre l'arbre d'entrée (7) et l'arbre de sortie (8) se trouve un rapport de transmission avec des pignons de transmission, lequel est réalisé sous forme de transmission à moyen de traction,
   tous les pignons de transmission se trouvent constamment en rotation pendant le fonctionnement, le rapport de transmission se trouvant entre l'arbre d'entrée (7) et l'arbre de sortie (8) est réalisé sous forme de transmission à moyen de traction avec une courroie dentée en tant que moyen de traction (66) et avec des poulies de courroie dentée (60, 61) en tant que roues de transmission,

**caractérisée en ce que**
la courroie dentée est comprimée sous forme réniforme pendant la rotation sans charge sur les poulies de courroie dentée (60, 61) par au moins un composant (68) et **en ce que** sous l'action d'une charge cet au moins un composant (68) ne vient pas en contact avec la courroie dentée (66) et
la forme réniforme de la courroie dentée (66) pendant la rotation sans charge est formée par une courbure convexe d'un tronçon en charge et par une courbure concave d'un tronçon à vide, et
la forme réniforme de la courroie dentée (66) est formée en charge par une forme droite du tronçon en charge et par une courbure concave accrue du tronçon à vide.

2. Transmission selon la revendication 1, dans laquelle
les courroies dentées (66) sont renforcées par de l'aramide, du kevlar, des fibres de carbone ou d'autres matériaux fibreux.

3. Transmission selon la revendication 1 ou 2, dans laquelle les poulies de courroie dentée (60, 61) se trouvent supportées à rotation sur l'arbre d'entrée (7) ou l'arbre de sortie (8), les poulies de courroie dentée (60, 61) pouvant être reliées de manière solidaire en rotation à l'arbre de sortie ou à l'arbre d'entrée (7, 8) par un mécanisme d'accouplement.

4. Transmission selon la revendication 3, dans laquelle à l'intérieur du mécanisme d'accouplement est monté au moins un composant déplaçable ou rotatif par rapport à une denture.

5. Transmission selon la revendication 3, dans laquelle à l'intérieur du mécanisme d'accouplement au moins un composant peut adopter une position engagée par correspondance géométrique dans une denture.

6. Transmission selon la revendication 3, dans laquelle à l'intérieur du mécanisme d'accouplement au moins un composant peut adopter une position à distance par rapport à une denture.

7. Transmission selon la revendication 3, dans laquelle au moins un composant à l'intérieur du mécanisme d'accouplement possède les propriétés d'un aimant permanent (79) avec un pôle nord et un pôle sud magnétique.

8. Transmission selon la revendication 3, dans laquelle un état du mécanisme d'accouplement est modifie par une modification d'un champ magnétique supplémentaire à l'intérieur ou à proximité immédiate du mécanisme d'accouplement.

9. Transmission selon la revendication 2 ou 3, dans laquelle pendant au moins une opération de changement de vitesses, un état d'au moins deux mécanismes d'accouplement est modifié simultanément.

10. Transmission selon la revendication 3, dans laquelle au moins un mécanisme d'accouplement peut transmettre seulement des couples dans un sens de rotation.

11. Transmission selon la revendication 4, dans laquelle au moins un composant adopte une position à distance d'une denture, après que deux champs magnétiques de polarisation identique se sont déplacés l'un vers l'autre.

12. Transmission selon la revendication 4, dans laquelle un mécanisme d'accouplement par engagement par correspondance géométrique est formé par des dents de roue libre (58) qui peuvent s'engager dans une denture.

13. Transmission selon la revendication 12, dans laquelle la denture est réalisée sous forme de denture interne.

14. Transmission selon la revendication 12, dans laquelle les dents de roue libre (58) sont disposées symétriquement par rapport à la denture.

15. Transmission selon la revendication 12, dans laquelle les dents de roue libre (58) sont montées de manière à pouvoir basculer sur des axes en acier (23) à l'intérieur de l'arbre de sortie (8) sur lequel se trouve le mécanisme d'accouplement.

16. Transmission selon la revendication 4, dans laquelle au moins un mécanisme d'accouplement est assemblé à partir d'un aimant permanent et d'un composant en acier.

**17.** Transmission selon la revendication 8, dans laquelle on obtient une modification du champ magnétique supplémentaire par un déplacement axial d'aimants permanents le long de l'axe de rotation d'un arbre sur lequel se trouve le mécanisme d'accouplement.

**18.** Transmission selon la revendication 17, dans laquelle un déplacement axial d'aimants permanents est effectué à l'intérieur de l'arbre de sortie qui est creux.

**19.** Transmission selon la revendication 17, dans laquelle le déplacement axial d'aimants permanents est effectué à l'extérieur de l'arbre d'entrée (7).

**20.** Transmission selon la revendication 17, dans laquelle les aimants permanents (79) qui ont été déplacés axialement sont introduits dans un composant coulissant de commande (100).

**21.** Transmission selon la revendication 20, dans laquelle les aimants permanents (79) sont introduits dans une polarité différente dans le composant coulissant de commande (100).

**22.** Transmission selon la revendication 20, dans laquelle un support sur palier (89) se trouve à l'intérieur du composant coulissant de commande (100).

**23.** Transmission selon la revendication 20, dans laquelle le composant coulissant de commande (100) est en liaison avec une courroie dentée pour le mouvement axial.

**24.** Transmission selon la revendication 20, dans laquelle le composant coulissant de commande (100) adopte des points d'encliquetage à l'intérieur de son mouvement axial par rapport à l'arbre de sortie ou à l'arbre d'entrée.

**25.** Transmission selon la revendication 15, dans laquelle une position basculée de la dent de roue libre (58) sur les axes en acier (23) est maintenue par un aimant permanent.

**26.** Transmission selon la revendication 25, dans laquelle l'aimant permanent est introduit dans un arbre sur lequel se trouve le mécanisme d'accouplement.

**27.** Transmission selon la revendication 3, dans laquelle la liaison solidaire en rotation par engagement par correspondance géométrique entre l'arbre d'entrée ou l'arbre de sortie et la poulie de courroie dentée peut être supprimée à l'aide d'énergie qui a été accumulée dans un champ magnétique préalablement au désaccouplement.

**28.** Transmission selon la revendication 8, dans laquelle la modification du champ magnétique supplémentaire est effectuée à l'intérieur ou à proximité immédiate du mécanisme d'accouplement par des électroaimants.

**29.** Transmission selon la revendication 1 ou 2, dans laquelle le bâti des rapports de transmission est réalisé sous forme de boîtier fermé (43).

**30.** Transmission selon la revendication 2, dans laquelle les matériaux fibreux sont gainés avec du polyuréthanne.

**31.** Transmission selon la revendication 1 ou 2, dans laquelle les courroies dentées modifient leur tension de courroie pendant l'opération de changement de vitesses.

**32.** Transmission selon la revendication 1 ou 2, dans laquelle les courroies dentées modifient leur angle d'enveloppement sur la poulie de courroie dentée pendant l'opération de changement de vitesses.

**33.** Transmission selon la revendication 1 ou 2, dans laquelle l'au moins un composant qui presse la courroie dentée dans une forme réniforme, est réalisé sous forme de rouleau.

**34.** Transmission selon la revendication 1 ou 2, dans laquelle des guides supplémentaires se trouve sur le côté du tronçon à vide sans contact et à proximité immédiate des courroies dentées (66) et sont formés de manière similaire au contour extérieur de la courroie dentée.

Fig. 1

Fig. 2

Fig. 3

Fig. 4a

Fig. 4b

Fig. 5a

Fig 5b

Fig. 6a

Fig. 6b

Fig. 7a

Fig. 7b

EP 2 139 752 B1

Fig. 8a.

Fig. 8b

Fig. 9a

Fig. 9b

*Fig. 10a*

*Fig. 10b*

*Fig. 10c*

*Fig. 11a*

*Fig. 11b*

*Fig. 11c*

Fig. 12a

Fig 12b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10339207
- US 5553510 A
- US 4955247 A
- US 5924950 A
- DE 20201787 U1
- WO 2006039880 A1
- US 20040067804 A1
- US 20040066017 A1
- US 4158316 A
- US 2004066017 A1
- CH 167367
- US 6146296 A
- US 5871412 A
- DE 102007013443